(19) Europäisches Patentamt
European Patent Office
Office européen des brevets

(11) EP 1 578 032 A1

(12) **EUROPEAN PATENT APPLICATION**
published in accordance with Art. 158(3) EPC

(43) Date of publication:
**21.09.2005 Bulletin 2005/38**

(21) Application number: **03786254.7**

(22) Date of filing: **24.12.2003**

(51) Int Cl.[7]: **H04B 7/04**, H04B 17/00, G01R 29/00, G01R 31/00

(86) International application number:
**PCT/JP2003/016531**

(87) International publication number:
**WO 2004/059876 (15.07.2004 Gazette 2004/29)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **24.12.2002 JP 2002372960**

(71) Applicant: **MATSUSHITA ELECTRIC INDUSTRIAL CO., LTD.**
**Osaka 571-8501 (JP)**

(72) Inventors:
- **INOGAI, Kazunori**
**Yokohama-shi, Kanagawa 236-0032 (JP)**
- **IMAMURA, Daichi**
**Yokosuka-shi, Kanagawa 239-0843 (JP)**
- **HOSHINO, Masayuki**
**Yokosuka-shi, Kanagawa 239-0806 (JP)**
- **OTA, Genichiro**
**Miura-shi, Kanagawa 238-0246 (JP)**

(74) Representative: **Grünecker, Kinkeldey, Stockmair & Schwanhäusser Anwaltssozietät**
**Maximilianstrasse 58**
**80538 München (DE)**

(54) **TRANSMISSION PATH SIMULATION METHOD AND TRANSMISSION PATH SIMULATOR**

(57) Provided are switch 125 which makes N copies of each of M signals obtained in a transmission system, and thereby forms MxN channel signals, channel processing sections 126-1 to 126-MN which add correlated instantaneous variations and short-term variations corresponding to arrangements of transmission and reception antennas to the MxN channel signals, respectively, and selection combining section 128 which selectively combines M channel signals repeatedly among the MxN channel signals provided with channel variations to form N signals.

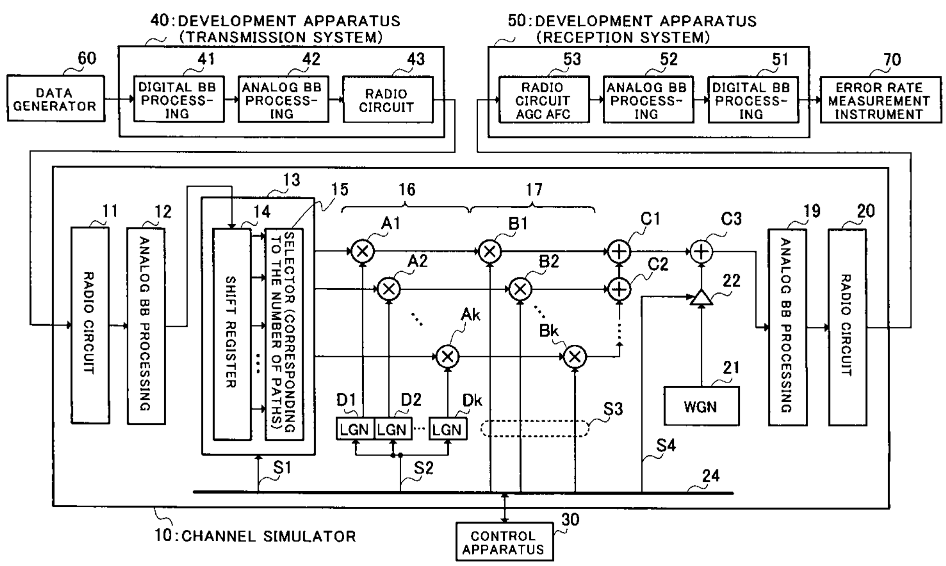


FIG.1 (PRIOR ART)



Printed by Jouve, 75001 PARIS (FR)

## Description

Technical Field

The present invention relates to a channel simulation method to simulate wireless channels in multi-antenna communications, and to a channel simulator to simulate wireless channels in multi-antenna communications to promote development of wireless apparatus.

Background Art

Conventionally, in developing a cellular telephone, a base station for the telephone, and MT and AP of wireless LAN, there is needed an apparatus for simulating a wireless channel as an environment for performance evaluation of a development apparatus, i.e. a channel simulator.

By comparing transmission characteristics obtained by providing signals transmitted from a development apparatus with simulated fading and receiver noise using a channel simulator with theoretical values or computer simulation values, it is possible to judge whether the development apparatus performs desired operation. Further, by reproducing a channel state of a running experimental course, it is possible to analyze a failure of a development apparatus occurring under an actual propagation environment. By thus using a channel simulator, characteristic evaluations of a development apparatus can be performed in a room with ease.

FIG.1 shows an example of a configuration of a conventional channel simulator. In channel simulator 10, a transmission signal output from a transmission system of a development apparatus 40 is passed through a multipath channel configured according to set parameters from control apparatus 30. At this point, a signal passed through each path is given the amplitude variation and phase variation (hereinafter, referred to as channel variations) simulating fading, and weighted with a gain of each path to be added. The signal given the channel variations and receiver noise by channel simulator 10 is received and demodulated in reception system 50 of the development apparatus, and the demodulated signal is output to error rate measurement instrument 70. Thus, it is possible to evaluate performance of transmission system 40 and reception system 50 of the development apparatus by observing error rate measurement results obtained by adding various channel variations using channel simulator 10.

A specific configuration of channel simulator 10 will be described below. Channel simulator 10 is connected to transmission system 40 of the development apparatus comprised of digital baseband processing section (digital BB processing section) 41, analog baseband processing section (analog BB processing section) 42 and radio circuit 43, while being connected to reception system 50 of the development apparatus comprised of radio circuit 53, analog BB processing section 52 and digital BB processing section 51. In addition, in FIG.1, each line represents two baseband signal lines comprised of an I channel (in-phase i.e. the real part of a complex number) and a Q channel (quadrature i.e. the imaginary part of the complex number), except lines for connecting between radio circuits 43 and 11 and between radio circuits 20 and 53.

Digital data generated in data generator 60 is input to channel simulator 10 via digital BB processing section 41, analog BB processing section 42 and radio circuit 43 of transmission system 40. Digital BB processing section 41 is a portion to perform digital modulation, spreading and other processing when transmission system 40 of the development apparatus is a CDMA (Code Division Multiple Access) transmission apparatus, while being a portion to perform digital modulation, inverse Fourier transform and other processing when the system 40 is an OFDM transmission apparatus. Analog BB processing section 42 is a digital/analog conversion circuit, and radio circuit 43 is a portion to perform upconverting, signal amplification, etc.

Channel simulator 10 has radio circuit 11 that performs processing inverse to that in radio circuit 43, i.e. processing such as downconverting, and analog BB processing section 12 comprised of an analog/digital conversion circuit, and converts a signal from transmission system 40 into a digital baseband signal using radio circuit 11 and analog BB processing section 12.

The digital baseband signal is input to multipath signal generating section 13 comprised of shift register 14 and selector 15, and becomes a multipath signal in multipath signal generating section 13. More specifically, shift register 14 shifts the digital baseband signal input thereto by time obtained by dividing the maximum delay time of a path by a sampling cycle of analog BB processing section 12.

Selector 15 selects signals corresponding to the number of paths from among signals output from each shift stage of shift register 14. At this point, multipath instruction signal S1 indicative of the number of paths and delay time of each path designated from control apparatus 30 is input to multipath generating section 13, and shift register 14 and selector 15 operate based on multipath instruction signal S1. In this way, selector 15 in multipath generating section 13 outputs a signal corresponding to each path under multipath environments.

The signal corresponding to each path is output to a respective one of complex multipliers A1 to Ak in instantaneous variation (Rayleigh fading) adding section 16. Complex multipliers A1 to Ak are supplied with complex gauss

ian noisesgenerated by band-limited complex gaussian noise generating sections (LGN) D1 to Dk, respectively. In addition, eachofband-limitedcomplex gaussian noise generating sections (LGN) D1 to Dk is comprised of a white gaussian noise generating section and a Doppler filter, and generates a white gaussian noise limited in band to a range of maximum Doppler frequency S2 input from control apparatus 30. By this means, complex multipliers A1 to Ak output respective signals of paths each provided with the instantaneous variation.

The signals of paths provided with instantaneous variations are output to a plurality of complex multipliers, B1 to Bk, forming short-term variation adding section 17. Each of complex multipliers B1 to Bk is supplied with complex gain S3 corresponding to the respective path designated from control apparatus 30, and thus, short-term variation adding section 17 outputs a signal of each path provided with shadowing and distance variation. By this means, in channel simulator 10, for each path, a signal is formed which is provided with the instantaneous variation, shadowing and distance variation designated from control apparatus 30, and the signal of each path is all added in adders C1, C2,..., whereby a multipath signal is formed in which are reflected channel variations.

The multipath signal is supplied to adder C3. Adder C3 is also supplied with the white gaussian noise that is generated in white gaussian noise generating section (WGN) 21 and amplified in amplifier 22 to noise level S4 designated from control apparatus 30. In this way, adder C3 adds a receiver noise to the multipath signal.

Analog BB processing section 19 and radio circuit 20 respectively have the same configurations as those of analog BB processing section 42 and radio circuit 43 of transmission system 40, perform digital/analog conversion on a digital BB signal given the channel variations and receiver noise, and then, further perform radio processing such as upconverting and amplification on the converted signal.

An output signal of channel simulator 10 is input to radio circuit 53 of development apparatus (reception system) 50. Radio circuit 53 has an AGC (Automatic Gain Control) circuit and AFC (Automatic Frequency Control) circuit, and compensates for carrier frequency offset between transmission and reception and input level variations. The signal having undergone analog/digital conversion in analog BB processing section 52 is output to digital BB processing section 51.

Digital BB processing section 51 is a portion to perform digital demodulation, despreading and other processing when development apparatus (reception system) 50 is a CDMA (Code Division Multiple Access) reception apparatus, while being a portion to perform digital demodulation, Fourier transform and other processing when the system 50 is an OFDM reception apparatus. The signal processed in digital BB processing 51 is input to error rate measurement instrument 70, and error rate measurement instrument 70 measures a channel error rate of the signal.

Thus, in channel simulator 10, simulated multipath and fading variation on each path assumed to occur on transmission channels are added to radio signals obtained in transmission system 40 of the development apparatus, thus obtained signals are input to reception system 50 of the development apparatus, and error rate characteristics of signals processed in reception system 50 are measured, thereby evaluating transmission characteristics of transmission system 40 and reception system 50.

In recent years, as techniques enabling large-capacity data transmission, attention is being given to multi-antenna techniques typified by MIMO (Multi Input Multi Output) and adaptive array antenna. For example, in a multi-antenna apparatus using the MIMO technique, a plurality of antennas is provided for the transmission and reception systems, each antenna of the transmission system transmits respective different data, and the reception system performs propagation path estimation and other processing on combined signals to separate, and restores a plurality of items of data.

In developing the multi-antenna apparatus, performance evaluations using a conventional channel simulator only enables inadequate evaluations. In other words, in the multi-antenna apparatus having M antennas on the transmission side and N antennas on the reception side, there exist MxN transmission channels, but the conventional channel simulator only allows measurements on a single channel. Even if the number of channels is increased, it is not extremely insufficient to evaluate the systems whose performance depend on spatial information such as transmission and reception antenna arrangements and radiation direction and the direction of arrival on each path.

Further, in a channel simulator with the merely increased number of channels, in order to reproduce multi-channel using channel data collected in running experiments, it is necessary to collect data of all the channels and all the paths involved in the number of transmission and reception antennas and their arrangements of data collecting apparatuses used in a development apparatus and running experiments, and as well as the need of enormous memory to store data, running experiments should repeatedly be carried out whenever the number of transmission and reception antennas and/or their arrangement is changed.

## Disclosure of Invention

It is an object of the present invention to provide a channel simulation method and channel simulator enabling MxN-channel transmission formed by a multi-antenna apparatus to be simulated with simplicity and excellence.

The object is achieved by generating channel variations of all the channels based on information of arrangements of transmission and reception antennas. In the present invention, it is noted that a delay difference and phase difference of each path occur corresponding to antenna installation positions of transmission and reception antennas in each channel, and by varying only the delay difference and phase difference of each path in each channel, an MxN-channel variation model is simplified.

Description of Drawings

FIG.1 is a block diagram illustrating a configuration of a conventional channel simulator;
FIG.2 is a view illustrating 1x1-channel transmission;
FIG.3 is a view to explain paths;
FIG.4(A) is a view illustrating a delay profile;
FIG.4(B) is a view illustrating an instantaneous variation;
FIG.4(C) is a view illustrating a short-term variation;
FIG.4(D) is a view illustrating a long-term variation;
FIG.5 is a view to explain an elementary signal;
FIG. 6 is a view illustrating a model with a single elementary signal;
FIG.7 is a view illustrating a case where a signal reflected diffusely by a sphere near a virtual antenna is received in line-of-sight angle $\phi$ as an elementary signal;
FIG.8 is a view illustrating propagation delays with a large line-of-sight angle;
FIG.9(A) is a view illustrating the direction of arrival of an elementary signal when the radius of a scattering sphere includes a reception antenna;
FIG. 9 (B) is another view illustrating the direction of arrival of an elementary signal when the radius of a scattering sphere includes a reception antenna;
FIG. 10 is a view to explain a principle of generation of a standing wave under an environment with a large number of reflection waves;
FIG. 11 is a view to explain a power density spectrum of variation in envelop amplitude due to Rayleigh fading;
FIG.12 is another view to explain a power density spectrum of variation in envelop amplitude due to Rayleigh fading;
FIG.13 is a view illustrating an MxN-channel transmission formed by a multi-antenna apparatus;
FIG. 14 (A) is a view to explain a difference in path distance caused by a distance between transmission and reception antennas, radiation angle, and the angle of arrival;
FIG.14 (B) is another view to explain a difference in path distance caused by a distance between transmission and reception antennas, radiation angle, and the angle of arrival;
FIG.15 is a view illustrating an environment with signals arriving in all the directions;
FIG.16 is a view illustrating a model to add an instantaneous variation to each channel when multipath is not present;
FIG.17 is a view illustrating a model to add an instantaneous variation to each channel when multipath is present;
FIG.18 is a view illustrating a model to generate mutually correlated band-limitedcomplex gaussian noises from MxNxP mutually independent band-limited complex gaussian noises;
FIG.19 is a block diagram illustrating a configuration to generate correlated instantaneous variations (two signals) proposed by Sasaoka;
FIG. 20 (A) is a view to explain a principle to form MxN-channel correlated instantaneous variations from 1x1-channel instantaneous variations;
FIG.20(B) is another view to explain a principle to form MxN-channel correlated instantaneous variations from 1x1-channel instantaneous variations;
FIG.21 is a block diagram illustrating connections between a channel simulator and development apparatus according to an Embodiment of the present invention;
FIG.22 is a block diagram illustrating a configuration of a channel simulator of the Embodiment;
FIG.23 is a table showing descriptions of each parameter used in the Embodiment;
FIG.24 is a block diagram illustrating a configuration of a reference channel path control section;
FIG.25 is a block diagram illustrating a configuration of a channel processing section;
FIG.26 is a block diagram illustrating a configuration of a correlated gaussian noise generating section;
FIG.27 is a block diagram illustrating a configuration of a reference channel path control section;
FIG.28 is a block diagram illustrating a configuration of a channel processing section;
FIG.29 is a block diagram illustrating a configuration of a correlated gaussian noise generating section;
FIG.30 is a block diagram illustrating a configuration of a fading adding section;
FIG.31 is a block diagram illustrating a configuration of a transmission analog adjusting section;

FIG. 32 is a block diagram illustrating a pseudo power amplifier (PA); and
FIG.33 is a block diagram illustrating a configuration of a reception analog adjusting section.

Best Mode for Carrying Out the Invention

In order to accurately simulate transmission channels in a multi-antenna apparatus having M transmissionantennasand Nreceptionantennas,different channel variations should be added to MxN transmission channels. However, when channel variations of MxN channels are simulated by simply adding channel variation parameters for each channel, enormous amounts of parameters and computations are required and an apparatus configuration becomes complicated.
The inventor of the present invention thought that if channel models are simplified in forming the channel models of MxN channels in a multi-antenna apparatus, the number of parameters and computation amounts would be reduced, and as a result, an apparatus configuration would also be simplified relatively, and has reached the present invention.
It is a gist of the present invention generating channel variations on all the channels based on information of arrangements of transmission and reception antennas. In the present invention, it is noted that a delay difference and phase difference of each path are generated corresponding to antenna installation positions of transmission and reception antennas in each channel, and channel variation models of MxN channels are simplified by varying the delay difference and phase difference of each path in the channels. Further, in the present invention, on the assumption that a correlated instantaneous variation is multiplexed on a signal of each path, a channel variation model is generated such that the correlated instantaneous variation is added for each path.
By this means, it is possible to form channel variation models corresponding to a plurality of channels with a relatively small amount of calculations using approximate multipath channels obtained from existing single channel measurement data calculated in RayTrace simulation, actual running experiments, and so on.
Further, in the present invention, as a method of generating instantaneous variations (correlated complex gaussian noises) correlated between channels or paths, five following methods are proposed:

① Eigenvalue transformation (spatio-temporal)
② Eigenvalue transformation (spatio)
③ Cholesky factorization (spatio-temporal)
④ Cholesky factorization (spatio)
⑤ Expanded Sasaoka method (spatio-temporal)

Among these four methods, items 1 to 4 are to devise a method of obtaining a transformation matrix A in calculating a correlated instantaneous variation to add to each channel from mutually independent band-limited complex gaussian noises using the transformation matrix A. Item 5 is to devise to enable generation of correlated instantaneous variations on MxN channels by expanding the Sasaoka method of generating correlated instantaneous variations proposed on 1x2 channels.

(1) Principles in this Embodiment

Prior to descriptions on a constitution of the Embodiment, the principles in the Embodiment will be described first. The inventor of the present invention first considered different points and similar points between 1x1-channel transmission and MxN-channel transmission. Further, in order to expand a 1x1 channel transmission model to an MxN-channel transmission model with simplicity as possible, detailed studied were conducted on how to expand a short-term variation and instantaneous variation. The studies will sequentially be described below.

(1-1) 1x1-channel transmission

FIG.2 illustrates 1x1-channel transmission each way between a transmission antenna and a reception antenna. Hereinafter, a channel between one-to-one transmission and reception antennas is referred to as 1 channel. FIG. 3 illustrates paths. While the channel is shown by straight line in FIG.2, signals are actually reflected and diffracted in space, thereby passed through various paths (①~④ in FIG.3), andreceivedinareceiver. Then, propagation delays vary with path distances, and a delay profile is drawn with propagation delay time on the horizontal axis and reception power on the vertical axis, as shown in FIG.4(A). Signals arriving with different delays must have been passed through different propagation paths, and the propagation paths are simply referred to as paths.
Each path is defined by transmittal coefficient (complex) indicative of extents of delay, gain (actually, attenuation) and phase shift to which a signal passed through the path undergoes. Measuring the delay profile enables

acquisition of the approximate number of paths constituting the channel, and of scales of the delay and gain that each of the paths provides. A phase on each path varies with traveling speed and the angle of arrival of a signal with respect to the traveling direction.

FIGs.4(B) to 4 (D) illustrate gain variations of a path (note that the horizontal axis represents the distance, instead of time). Gain variations are classified into a long-term variation (distance variation) dependent on the distance from the transmission antenna and directionalities of transmission and reception antennas, short-term variation (shadowing) due to effects of shields by objects on the ground, and instantaneous variation due to multi-wave multiplexing.

The propagation distance and propagation delay are in a proportional relationship, and therefore, the long-term variation has almost the same shape as that of the delay profile. When a terminal travels in mobile communications, the propagation distance (or propagation delay) of each path varies, and the reception level also varies, but the rate of the variation is the slowest (very slow) among the other variations. The long-term variation was modeled with the Okumura curve (Hata method) which was made by analyzing statistically a lot of running experiment data and has been used widely. Further, in recent years, the Sakagami method has been used which is modified by adding a use frequency band and parameters of ground objects.

The short-term variation is a gain variation caused by each path being shield or appearing by/from a building or the like (a path may be shield by a person walking around in wireless LAN). With respect to the variation rate, there is no theoretical equation, but in general, the rate is assumed to be 1Hz or less. Actually, the short-term variation should be determined from a cause of occurrence in relation to objects on the ground and traveling speed. For example, when a terminal travels at speed of 30Km/h in a building street with a building width of 30m, it is considered that a variation occurs in a cycle of 3.6 seconds, and surely, such a frequency is estimated to be 1Hz or less in many cases. The gain variation due to the short-term variation follows a logarithm normal distribution, and is modeled such that the gain varies concurrently in a band (in the above case, the band ranges from 0 to 1/3.6 [Hz]).

The instantaneous variation is a variation occurring when several elementary signals are multiplexed. On a path looking like a single path on the delay profile, a plurality of signals (such that the amplitude and phases are not in complete agreement) is passed actually. The multiplexed signal thus seeming to pass on a single path on the delay profile is referred to as an elementary signal, and the amplitude and phase varies (which is regarded as a single signal-wave being passed through a path providing variations in gain and phase). The instantaneous variation is explained by the Doppler effect, and varies at speed of about several hertz to 1kHz as described later.

Properties of an elementary signal causing the instantaneous variation are characterized by the angle of arrival $\theta$ and line-of-sight angle $\phi$ (variation width of the angle of arrival $\theta$). In FIG.5, attention is directed toward elementary signal ③ in FIG. 4(A). Paths are widely divided in space in FIG. 4 (A), and therefore, the receiver receives signals undergoing completely different variations. Accordingly, for example, elementary signal ③ can be regarded as a signal coming from a virtual transmission antenna on an extended line in the direction of arrival (on the assumption that the receiver is moving at speed v upwardly as viewed in the figure) .

FIG.6 shows a case of a single elementary signal. In this case, the elementary signal is not a multiplexed signal, and is received without any variations in amplitude and phase except Doppler shift due to traveling. Such a case hardly occurs in mobile communications, but is sometimes used as a channel model. In addition, an amount of Doppler shift of elementary signal ③ is represented by $f_D\cos\theta$ where $f_D$=v×$f_c$/c.

FIG.7 shows a casewhere a signal reflecteddiffusely by a sphere near a virtual antenna is received in a line-of-sight angle $\phi$ (variation width of the angle of arrival $\theta$) as an elementary signal. In this case, the elementary signal varies in amplitude and phase, but the angle of arrival $\theta$ can be measured stably because the line-of-sight angle $\phi$ is small, and the delay difference is thus small also. However, as the line-of-sight angle $\phi$ is increased (the radius of the scattering sphere near the virtual antenna is increased), the elementary signal includes signals with considerably large delay differences as shown in FIG.8. As a result, the amplitude and phase both vary largely, and it becomes difficult to measure the angle of arrival $\theta$.

When the radius of the scattering sphere is further increased and starts including the reception antenna as shown in FIG.9(A), the elementary signal seems to come from in every direction, and in this case, should be divided into elementary signals of a plurality of paths on the delay profile. However, even if the elementary signal is divided on the delay profile, divided signals also contain a number of signals which have same propagation delays but are passed through spatially completely different paths, and therefore, each of divided elementary signals seems to come from every direction. In other words, an image as shown in FIG. 9 (B) is obtained (like the figure with the inverse transmission direction to FIG.7). As a matter of course, it is not possible to measure the angle of direction of each elementary signal (such measurement is meaningless).

In an environment with a large number of reflection waves as shown in FIG.10, a standing wave occurs, and with respect to the reception level, spatially strong points and weak points appear repeatedly. This is the reason of spatial distribution of the instantaneous variation. In particular, the instantaneous variation occurring when independent signals of almost the same level arrive in all the directions is referred to as Rayleigh fading, and it is known that the envelop amplitude variation conforms to the Rayleigh distribution and that the phase variation conforms to the uniform

distribution.

FIGs .11 and 12 illustrate power density spectra of the envelop amplitude variation due to Rayleigh fading. In the case where signals arrive in directions ①, ②, ③ and ④ with respect to the traveling direction v as shown in FIG.11, the signal coming in direction ① seems to have the highest frequency, and reversely, the signal coming in direction④ seems to have the lowest frequency. This maximum frequency deviation is referred to as maximum Doppler frequency $f_D$. The maximum Doppler frequency $f_D$ can be calculated as the number of standing waves contained in a traveling distance in a second where the standing waves are repeated in a cycle of wavelength, and generally, ranges from about several hertz to 1kHz (when the carrier frequency is 2GHz and the traveling speed is 100km/h, $f_D$ is a multiplication of these numerals, 200Hz). Similarly, a frequency deviation of $f_D \cdot \cos\theta$ is imposed on the signal ② coming at angle θ toward the traveling direction v, while the signal ③ with θ of 90 degrees does not undergo the deviation.

In addition, for example, in the instantaneous variation such that elementary signal④ arrives only in shaded directions (the angle of arrival θ = 180°, the line-of-sight angle ϕ = 80°) as shown in FIG. 11, when five or more signals are contained, the variation is regarded as Rayleigh fading. The power density spectrum is only a shaded potion as shown in FIG.12.

According to the foregoing, it is possible to define a long-term delay profile, short-term delay profile and instantaneous delay profile. Each path on the long-term delay profile undergoes the long-term variation. Its delay and gain are determined according to the condition of objects on the ground, traveling speed and direction and the angle of arrival, and vary slowly. Each path on the short-term delay profile undergoes the short-term variation (shadowing) in addition to the long-term variation. By this means, the gain of each path varies at a rate of 1Hz or less in the logarithm normal distribution independent of each path.

Each path on the instantaneous delay profile undergoes the instantaneous variation in addition to the long-term variation and short-term variation. By this means, the gain and phase of each path are subjected to Rayleigh fading (with the gain of the Rayleigh distribution and the phase of the uniform distribution) independent of each path. The variation rate is determined by the carrier frequency, traveling speed, the angle of arrival and line-of-sight angle, and ranges from several to several hundred hertz.

In addition, the amplitude on the delay profile represents reception power of an elementary signal coming from each path, and does not have the gain nor phase (accurately, which is complex amplitude of complex impulse response on each channel). Conversely, "representation of power of each path" is not appropriate, but may be used in the scope without causing misunderstanding according to convention.

(1-2) Expansion to MxN-channel transmission

(1-2-1) Expansion of the short-term variation

FIG.13 illustrates MxN-channel transmission formed by a multi-antenna apparatus having M transmission antennas and N reception antennas.

The inventor of the present invention thought that MxN channels are similar to one another. In other words, unless the arrangements of transmission and reception antennas are spread out in an area of several meters square, assuming that an interval of the short-term variation is about ten and several meters, it should be regarded that not only long-term delay profiles but also short-term delay profiles respectively observed actually in the reception antennas are almost equal to one another.

Then, considerations reached that differences between channels on the short-term delay profile are only in propagation delay and carrier phase of each path due to a difference in path distance resulting from the arrangements of transmission and reception antennas.

FIG. 14 (A) illustrates comparisonbetweenpaths from two transmission antennas to a single reception antenna. When distance $d_T$ between elements is small enough, paths from vicinities of the antennas to the reception antenna can be regarded as being common, a difference in path distance is thus $d_T \cdot \cos\theta_T$, and corresponding to the difference, the channel has differences in path delay and phase (that is a carrier phase, but can be referred to as a path phase) .

Reception antennas as shown in FIG.14(B) have similar phenomenon. However, note that the radiation angle $\theta_T$ and the angle of arrival $\theta_R$ are defined for each path. In the case where radiation angles and angles of arrival range in all the directions as shown in FIG.9, differences in path distance are reversed with angles, and on average, can be considered as being not present. It is the same as in a path with unknown radiation angle and angle of arrival.

Based on the aforementioned considerations, the inventor of the present invention has reached a conclusion that if the radiation angle and angle of arrival are obtained in each path on the short-term delay profile of either one of the channels, short-term delay profiles of the other channels can be calculated from arrangements of transmission and reception antenna elements.

Accordingly, in the present invention, using existing one-channel transmission measurement data (including

short-term delay profiles) obtained in Ray-Trace simulation, actual running experiments and so on, short-term delay profiles (variations in delay, gain and phase of all the paths) of MxN channels are formed by calculations from the one-channel transmission measurement data and arrangements of transmission and reception antenna elements, thereby forming channel variation models of MxN channels. It is thereby possible to generate information of paths on all the channels with simplicity and accuracy from information of each path on the reference channel.

(1-2-2) Expansion of instantaneous variation

Considered next is an instantaneous variation on each channel. The inventor of the present invention studied on how instantaneous variations of channels and paths are similar to one another.

In the case of the instantaneous variation, for example, with respect to standing waves with a band of 5GHz, on average, a distance of 3cm (half-wavelength) contains a single wave. Therefore, unlike the short-term variation, instantaneous variations are not equal on all the antennas. However, it may be said that at the moment when some antenna undergoes a position variation, an adjacent antenna generally undergoesaposition variation also. The similar phenomenon may occur in time. The instantaneous variation varies at a rate of 1kHz or less, and when a positive variation is imposed at a moment, it is likely that the positive variation lasts 0.1ms later. The former is quantitatively represented by spatio correlation function, while the latter is quantitatively represented by temporal correlation function, and with respect to Rayleigh fading where signals come from all the directions, these functions are led to following equations:

Spatial correlation function : $$\rho(d) = \overline{x_i^*(t) \cdot x_j(t)} = J_0(2\pi d/\lambda)$$

...... (1)

Temporal correlation function : $$\rho(\tau) = \overline{x_i^*(t) \cdot x_i(t+\tau)} = J_0(2\pi f_D \tau)$$

Temporal correlation function:

In equation (1), $x_i(t)$ and $x_j(t)$ respectively represent received signals (complex baseband signals) of ith and jth antennas, d is a distance between the antennas, r is delay time of a path, $\lambda$ is wavelength, and $f_D$ is the maximum Doppler frequency. Further, * represents a conjugate complex number, and $J_0$ represents Bessel function.

In the case of conventional evaluations on performance of antenna diversity, by setting a distance between antennas so that the antennas are sufficiently spaced, for example, by half-wavelength such that the spatio correlation value is small, evaluations have been carried out on the assumption that received signals are regarded as being not correlated with one another. This is based on the spatio correlation function of equation (1), but it is ignored that the time correlation is actually present.

Accordingly, in order to obtain more accurate results, there is needed a theory enabling concurrent analysis of temporal correlation and spatio correlation. With respect to this issue, Sasaoka derived that the spatio-temporal correlation function becomes the following equation under circumstances as shown in FIG. 15 (Sasaoka, "New Generation Method of Mutually Correlated Multipath Fading Waves ", IEICE, Transaction, 88/6, Vol.J71-B NO.6). Herein, in FIG.15, $\phi$ represents an arrangement angle of an antenna with respect to the traveling direction.

Spatio-temporal correlation function:

$$\rho(d,\tau) = J_0\left[\sqrt{(2\pi d_r/\lambda)^2 + (2\pi f_D \tau_r)^2}\right]$$

...... (2)

where

$$d_r = d \cdot sin\psi \text{ , } \tau_r = \tau - (d/\lambda f_D) \cdot cos\psi$$

In addition, FIG.15 shows an environment where signals come from all the directions. In the case where signals come from only some direction, an instantaneous variation may be used which has only part of U-shaped power density spectrum (FIG.12) of Rayleigh fading. This is because, while it is obvious to a sinusoidal wave, correlation between waves with different frequencies is "0" spatially and temporally, and therefore, equation (2) holds independently, irrespective of frequency components (i.e. the direction of arrival).

Considered next is the correlation between multipath (accurately, multipath that is identified by delay time). For example, as shown in FIG. 5, in the case where an elementary signal passed through each path is a single signal, since the elementary signal is a complete beam and the instantaneous variation does not occur, the short-term delay profile becomes the instantaneous delay profile. In other words, the correlation does not occur between the multipath by beam, which corresponds to the case where the line-of-sight angle is "0", and therefore the correlation is "0" because instantaneous variation spectra are not in agreement unless the line-of-sight angles are in agreement.

In contrast thereto, in the case where the line-of-sight angle is extremely large as shown in FIG.9, i.e. an elementary signal includes signals arriving from all directions, it is considered that in paths with large delay differences, spatial path differences between the paths become large and the correlation between the paths should be almost zero, while in paths with small delay differences, spatial path differences are small and similar instantaneous variations are imposed on the paths (i.e. there is the correlation) . In such a case, it is considered that equation (2) can also be applied to paths.

In the case of a path with the instantaneous variation of an almost unified elementary signal such that the line-of-sight angle is in a certain range as shown in FIG.7, it is considered obtaining an intermediate result between the two paths described above. In other words, following descriptions are considered.

(a) In the case of a few overlaps of the angle of arrival and line-of-sight angle in paths, the paths are obviously different in spatial route, and have small correlation (where the extreme case indicates "beam" in FIG.5).

(b) In the case where overlaps of the angle of arrival and line-of-sight angle are large and the difference in delay time is also large in paths, the paths are also different in spatial route, and have small correlation (which corresponds to the case of FIG.9).

(c) The correlation between paths received in different antennas largely depends on the distance between the antennas.

As a result, with respect to the correlation between paths, (a) can be implemented by performing band limitation on instantaneous variations corresponding to the angle of arrival and the line-of-sight angle, because different paths make the correlation small. (b) and (c) can be implemented by applying the spatio-temporal correlation function of eq.(2).

In the view of the foregoing, the MxN-channel transmission as shown in FIG.13 without multipath is represented by MN channels as shown in FIG.16. Herein, the gain of the short-term variation of each channel is assumed to be equal, and thus, FIG.16 shows only the instantaneous variation of each channel. Further, in order to eliminate effects of transmission data in observing the similarity degree between channels, transmission data is fixed to "1". Then, the variation is added by multiplying a signal of each channel by an instantaneous variation (complex gaussian noise) with spatio correlation based on a distance between antennas.

In a case of p-multipath, simulation is expanded as shown in FIG.17, and a signal of each path is multiplied by an instantaneous variation with spatio-temporal correlation of eq.(2) based on the distance between antennas and delay difference. In other words, in a configuration as shown in FIG.17, instantaneous variations are added using band-limited complex gaussian noises in consideration of the angle of arrival and the line-of-sight angle so that each path complies with the spatio-temporal correlation function of (2).

(1-3) Methodof generating correlated instantaneous variations

The issue is how to generate desired correlated complex gaussian noises. As described above, as a method of generating correlated instantaneous variations, proposed in this Embodiment are correlation matrix methods (eigenvalue transformation method and Cholesky factorization method) and expanded Sasaoka method.

FIG. 18 illustrates a method of generating MxNxP (P: the number of paths) mutually correlated band-limited complex gaussian noises (correlated gaussian noises) from MxNxP mutually independent band-limited complex gaussian noises, using transformation matrix A (with MNP rows and MNP columns). The issue is to obtain transformation

matrix A that provides desired path correlation.

Assuming that outputs of paths are $Y=(y_1, y_2, .... ,y_{MNP})^T$, the path-correlation matrix is as indicated in the following equation. In addition, for simplicity, numeral subscripts are indicated by serial numbers below. Further, in the following equation, * in upper subscript represents a conjugate complex number, H represents conjugate complex transpose, and E() represents an ensemble mean.

$$E(YY^H)=\begin{pmatrix} E(y_1 y_1{}^*) & E(y_1 y_2{}^*) & \cdots\cdots & E(y_1 y_{MNP}{}^*) \\ E(y_2 y_1{}^*) & E(y_2 y_2{}^*) & \cdots\cdots & E(y_2 y_{MNP}{}^*) \\ \vdots & \vdots & & \vdots \\ E(y_{MNP} y_1{}^*) & E(y_{MNP} y_2{}^*) & \cdots\cdots & E(y_{MNP} y_{MNP}{}^*) \end{pmatrix} \quad \cdots\cdots (3)$$

Each of $(MNP)^2$ elements represents correlation between paths, and is obtained by calculating a spatio-temporal correlation value of eq.(2) from a difference in path distance and a difference in propagation delay obtained from transmission and reception antenna arrangements and the radiation angle and the angle of arrival of a signal, and thus, desired path correlation matrix $\sum_{YY}$ is obtained.

In other words, it is required to generate Y such that $\sum_{YY}=E(YY^H)$, and to generate such Y, the issue is how to determine transformation matrix A in FIG. 18. This Embodiment proposes the method based on eigenvalue transformation, and the method based on Cholesky factorization.

(1-3-1) Eigenvalue transformation method

In FIG.18, such a relationship that Y=AX holds between complex gaussian noises. Herein, if an inverse matrix of transformation matrix A exists, the following equation holds:

$$X=A^{-1}Y \quad (4)$$

Eq.(4) represents obtaining (MNPx1) signal vector X without mutual correlation by multiplying (MNPxl1 signal vector Y with correlation as in eq. (3) by matrix $A^{-1}$, and this relationship is known as eigenvalue transformation (or KL transformation). In eigenvalue transformation, used as $A^{-1}$ is MNP (MNPx1) unit eigenvectors $e_1, e_2, ......, e_{MNP}$, in a row, of desired path correlation matrix $\sum_{YY}$, and transformation matrix A is indicated in the following equation:

$$A^{-1}=(e_1\ e_2\ ......\ e_{MNP})$$

$$A=(A^{-1})^{-1}=(A^{-1})^H=\begin{pmatrix} e_1{}^H \\ e_2{}^H \\ \vdots \\ e_{MNP}{}^H \end{pmatrix} \quad \cdots\cdots (5)$$

By thus obtaining transformation matrix A by the eigenvalue transformation method, it is possible to use a matrix with a small number of elements in obtaining correlated instantaneous variations from mutually independent

instantaneous variations, and thus, the correlated instantaneous variations can be obtained with a small amount of calculations.

In addition, described herein is the case of forming mutually correlated instantaneous variations that are correlated between channels and between paths by forming MxNx(the number of paths) correlated instantaneous variations correlated between paths by performing matrix operation processingon MxNx (the number of paths) mutually independent instantaneous variations using transformation matrix A. However, the present invention is applicable without being limited to such a case.

For example, correlated instantaneous variations corresponding to MxN channels that are correlated between all the channels may be formed by forming correlated instantaneous variations corresponding to MxN channels correlated with channels by performing the matrix operation processing on a plurality of mutually independent instantaneous variations corresponding to MxN channels using transformation matrix A. The foregoing is the same as in following descriptions.

(1-3-2) Cholesky factorization method

Desired path-correlation matrix $\Sigma_{YY}$ can be subjected to Cholesky factorization as in the following equation.

$$\Sigma_{YY} = L^H L \qquad (6)$$

where L is an (MNP x MNP) lower triangular matrix.

Transformation matrix A in FIG. 18 is obtained using obtained lower triangular matrix L in the following equation.

$$A = L^H \qquad (7)$$

This is because path correlation matrix $E(Y^HY)$ is indicated as in the following equation, since $Y=AX=L^HX$ from FIG.18.

$$E(YY^H)=E[(L^HX)(L^HX)^H]=E(L^HXX^HL)=L^HE(LXX^H)L=L^HL=\Sigma_{YY} \qquad (8)$$

Herein, since each element of vector X is an independent gaussian variable, correlation matrix $E(XX^H)=I$ is used.

With respect to Cholesky factorization, an approximate algorithm enabling large reductions in computation amount has been disclosed recently (H.R.Karimi etc. :"A Novel and Efficient Solution to Block-Based Joint-Detection Using Approximate Cholesky Factorization", PIMRC'98.p,1340-1345, 1998), and it is effective using such an algorithm.

By thus obtaining transformation matrix A using Cholesky factorization, it is possible to use a lower triangular matrix obtained by Cholesky factorization in obtaining correlated instantaneous variations from mutually independent instantaneous variations, and it is thereby possible to obtain the correlated instantaneous variations with a small amount of calculations.

(1-3-3) Expanded Sasaoka method

Proposed next is the method (hereinafter, referred to as an expanded Sasaoka method) of expanding the Sasaoka method to MxN-channel transmission, aside from obtaining correlated instantaneous variations from matrix A.

The method proposed by Sasaoka is first explained briefly. FIG.19 illustrates a block diagram to generate correlated instantaneous variations (two signals) proposed bySasaoka. Inaddition,systemsand parameters assumed in FIG.19 are the same as those as shown in FIG.15. With respect to FIG. 19, Doppler filters 102 and 105 perform spectral shaping on two-system white gaussian noises generated in white gaussian noise generating sections 101 and 104 to power density spectra of Rayleigh fading when an elementary signal includes signals arriving in all the directions, respectively (when the angle of arrival and the line-of-sight angle of an elementary signal are know, corresponding to which, the bandwidth is narrowed).

In order to cause the noises to be correlated with each other, the noises are passed through two types of filters, 103 and 106, respectively. In the conventional generation method, filters 103 and 106 have spatio correlation value $\rho$ and $\sqrt{(1-\rho^2)}$, and could not express temporal correlation. In order to also provide temporal correlation, Sasaoka replaced the filters. Filter characteristics H(f) and G (f) are determined by distance d between two reception antenna

elements, angle $\phi$ of antenna arrangement to the traveling direction, carrier wavelength $\lambda$, and maximum Doppler frequency $f_D$, and since gains are in sin-cos relation, the power density spectrum of an instantaneous variation of elementary signal 2 to input to complex multiplier 111 has the same shape (shape of Doppler filter) as that of elementary signal 1. Finally, corresponding to a sign of $\cos\phi$, either delay circuit 108 or 109 provides one of the elementary signals with delay. In addition, an output from delay circuit 108 is valid when $\cos\phi \geqq 0$, while an output from delay circuit 109 is valid when $\cos\phi < 0$.

Filters 103 and 106 in FIG.19 have complicated characteristics (that vary with conditions), and Sasaoka proposed to implement the filters by performing weighted addition of multitone with different frequencies.

Then, by spectral shaping as shown in FIG.19, filter characteristics H(f) and G(f) of filters 103 and 106 are obtained to generate correlated instantaneous variations meeting the spatio-temporal correlation function of eq.(2) (with respect to correlated instantaneous variations prior to Sasaoka, these filers having spatio correlation coefficients have been proposed, but it is descried that excellent approximation is not obtained unless $d/\lambda \ll 1$).

In FIG.19, two output signals of the Doppler filters are assumed to be $x_1(t)$ and $x_2(t)$. In order not to depend on transmission signals because of study on correlation between channels, it is further assumed that inputs of two elementary signals are "1", and that outputs of the elementary signals provided with instantaneous variations are $y_1(t)$ and $y_2(t)$ (i.e. which are the correlated instantaneous variations). Each power density spectrum (expression in frequency of the auto-correlation function) and cross power density spectrum (expression in frequency of cross-correlation function) are indicated by following equations:

$$S_{y1y1}(f) = S_{x1x1}(f)$$
$$= S(f) \ : \text{Doppler Spectrum}$$

$$S_{y2y2}(f) = |H(f)|^2 S_{x1x1}(f) + |G(f)|^2 S_{x2x2}(f)$$
$$= \{|H(f)|^2 + |G(f)|^2\} S(f)$$

$$S_{y1y2}(f) = H^*(f) S_{x1x1}(f)$$
$$= H^*(f) S_{x1x1}(f) \qquad \ldots (9)$$

The correlated instantaneous variations should have power density spectral with the same shape, and therefore, meet the following equation:

$$|H(f)|^2 + |G(f)|^2 = 1 \qquad (10)$$

Further, cross power density spectrum $S_{y1y2}(f)$ is obtained by subjecting eq. (2) to Fourier Transform, and the following equation holds:

$$H(f) = \cos\left(\frac{2\pi d \cdot \sin\Psi}{\lambda}\sqrt{1-\left(\frac{f_r}{f_D}\right)^2}\right) \qquad \cdots\cdots (11)$$

Then, with respect to G(f), the following equation is obtained from equations (10) and (11):

$$G(f)=\sin\left(\frac{2\pi d\cdot\sin\psi}{\lambda}\sqrt{1-\left(\frac{f_r}{f_D}\right)^2}\right) \quad \cdots\cdots (12)$$

In eq.(12), a positive or negative sign appears in obtaining a square root, and since either sign does not affect a correlation value of instantaneous variations, the positive sign is selected.

Considered below is a method of applying the method of generating correlated instantaneous variations as shown in FIG. 19 to MxN-channel transmission. FIGs.20(A) and 20 (B) are illustrations of the principle of forming MxN-channel correlated instantaneous variations from 1x1-channel instantaneous variation.

FIG.20(A) illustrates 1xN channels and 1xM channels, and FIG.20(B) illustrates conversion from 1xM channels into Mx1 channels. Considered first is the case of receiving signals from a single transmission antenna at N reception antennas as shown in FIG. 20 (A) (in this case, received signals likely have the correlation). It is herein assumed that complex impulse response is known on a transmission channel between the transmission antenna and reception antenna 1(hereinafter, such a channel is referred to as a 1-1 channel), and that the short-term delay profile of each channel has been calculated.

With respect to instantaneous variations, the method in FIG. 19 is applied to each path of the 1-1 channel and each corresponding path of a 1-2 channel . Thereafter, in the same way, correlated instantaneous variations of a 1-3 channel,....., 1-N channel are generated while varying the distance between antennas.

Shown on the left of FIG.20B is 1xM-channel transmission from the right to the left as viewed in the figure. Assuming that the transmission and reception antennas are in the same positions, the 1-1 channel has the same complex impulse response as that of the 1-1 channel of FIG.20(A) from the reversibility of channel. Accordingly, it is possible to generate all correlated instantaneous variations on the left of FIG.20(B) as in FIG. 20 (A) . Then, by changing the signal direction using the reversibility of channel again, correlated instantaneous variations of all the channels on the right of FIG.20(B) are obtained (in other words, even if a transmission antenna is different, the channel has correlation when the reception antenna is just one).

By applying the left-hand part of FIG.20 (B) to reception antennas of FIG.20(A), it is possible to generate all the correlated instantaneous variations on MxN channels in transmission. However, it is necessary to note following respects.

1. Use independent white gaussian noises in paths that are divided and identified on the delay profile. This is because different paths are considered as spatially distinguished paths.
2. While the 1-1 channel is used as a reference in the foregoing, any channel is available as a reference channel. This is because changing the reference channel changes propagation delays and phases, but does not provides changes in relative value. In addition, when antenna elements are circularly arranged, it is possible to set a reference channel in a center position where an antenna is not present actually.
3. The instantaneous variation of each channel is defined by correlation with the reference channel and generated, and for example, in FIG.20 (A), the correlation between the 1-2 channel and 1-3 channel is not ensured. In other words, in consideration of the fact that the correlation is a cosine function value between two data vectors, this expansion method is not appropriate.

(1-4) Summary

As proposed in the foregoing, it is possible to calculate delays, phases and correlated instantaneous variations of paths on all the channels from the installation information of transmission and reception antennas, and generate all the channel variation models on MxN channels. It is thereby possible to use existing single-channel transmission measurement data obtained in Ray-Trace simulation, actual running experiments or the like as MxN-channel transmission measurement data.

(2) A configuration of this Embodiment

(2-1) Entire configuration

FIG. 21 illustrates connections of channel simulator 120 according to this Embodiment and development apparatuses 40 and 50, with the same sections as in FIG.1 assigned the same reference numerals as in FIG.1. In addition, descriptions are omitted herein on portions already explained using FIG.1.

Channel simulator 120 simulates channels of development apparatuses 40 and 50 having a multi-antenna configuration, and thereby enables evaluations of channel characteristics of development apparatuses 40 and 50.

Channel simulator 120 is capable of receiving as its inputs digital baseband signal DB from digital BB processing section 41 of transmission system 40, analog baseband signal AB from analog BB processing section 42, and radio signal RF from radio circuit 43. An output of simulator 120 is selectively output to digital BB processing section 51, analog BB processing section 52 or radio circuit 53 of reception system 50 corresponding to the operation of switches SW3 and SW4.

By this means, it is possible to directly input digital baseband signal DB from digital BB processing section 41 to channel simulator 120 even if development of radio circuit 43 and analog BB processing section 42 has not been completed up to an operable state, and it is thereby possible to evaluate channel characteristics of digital BB processing sections 41 and 51 independently.

As a result, without waiting for completion of radio circuits 43 and 53 (particularly, radio circuit 53 of reception system 50), it is possible to check the operation of digital baseband processing sections 41 and 51 that perform principal processing, whereby efficiency in development can be improved.

FIG.22 illustrates a configuration of channel simulator 120. In channel simulator 120, interface section 122 receives radio signal RFin from radio circuit 43, analog baseband signal ABin from analog BB processing section 42 or digital baseband signal DBin from digital BB processing section 41. More specifically, radio signals RFin or analog baseband signals ABin corresponding to the number (M) of transmission antennas are input to analog circuit 123, converted into digital baseband signals in analog circuit 123, and output. Switch SW10 selects either input digital baseband signal DBin or the digital baseband signal converted in analog circuit 123 to output to transmission analog adjusting section 124. In addition, the baseband signal is comprised of an I signal and Q signal, thereby forming 2xM signals, and thus, indicated by 2M in the figure.

In other words, in circuits subsequent to transmission analog adjusting section 124, subjects of processing are M digital baseband signals. More specifically, M transmission analog adjusting sections 124 are provided corresponding to the number of digital baseband signals, and compensate M digital baseband signals for changes in transmission characteristics occurring due to fluctuations in performance of M analog BB processing sections 42, radio circuits 43 and analog circuits 123 of development apparatus (transmission system) 40. Specific configurations of transmission analog adjusting sections 124 will be described later.

Switch 125 as signal duplication means makes N copies of each of M digital baseband signals, thereby forms MxN digital baseband signals, and outputs the signals to MxN channel processing sections, 126-1 to 126-MN. Each of channel processing sections 126-1 to 126-MN receives information such as channel model information of a reference channel and transmission and reception antenna arrangement information formed in reference channel path control section 127, constructs a channel model of an assigned channel, and then, provides the digital baseband signal of the assigned channel with short-term complex impulse response and correlated instantaneous variation for the assigned channel corresponding to the constructed channel model in a complex multiplier. Specific configurations of channel processing sections 126-1 to 126-MN will be described later.

Selection combining section 128 selects M digital baseband signals repeatedly from among outputs of channel processing sections 126-1 to 126-MN to combine, and thereby forms N digital baseband signals corresponding to the number of reception antennas.

Reception analog adjusting sections 129 are provided corresponding to the number (N) of digital baseband signals, and compensate N digital baseband signals for changes in transmission characteristics occurring due to fluctuations in performance of N analog BB processing sections 52, radio circuits 53 and analog circuits 131 of development apparatus (reception system) 50. Specific configurations of reception analog adjusting sections 129 will be described later.

The digital baseband signal output from reception analog adjusting section 129 is input to output interface section 130. In evaluating channel characteristics of digital BB processing sections 41 and 51, digital baseband signal DBout is input to digital BB processing section 51 of reception system 50 via switch SW4. Meanwhile, in evaluating channel characteristics of digital BB processing sections 41 and 51 and analog BB processing sections 42 and 52, analog baseband signal ABout obtained in analog circuit 131 is input to analog BB processing section 52 of reception system 50 via switch SW3. Further, in evaluating channel characteristics of digital BB processing sections 41 and 51, analog BB processing sections 42 and 52, and radio circuits 43 and 53, radio signal RFout obtained in analog circuit

131 is input to radio circuit 53 of reception system 50.

(2-2) Configurations of the reference channel path control section and channel processing sections

Described below are configuration examples of reference channel path control section 127 and channel processing sections 126-1 1 to 126-MN. Herein, two configuration examples will be described in the case of using the expanded Sasaoka method and the case of using eigenvalue transformation method. It is assumed using parameters P10 to P20 and P30 as shown in FIG.23 in following descriptions.

(2-2-1) Case of using the expanded Sasaoka method

FIG.24 illustrates a configuration of reference channel path control section 127 . Reference channel path control section 127 is comprised of reference channel model forming section 140 and instantaneous variation initial value generating section 141.

Reference channel model forming section 140 has standard model generating section 142 to manually set complex impulse response information (i.e. set using control apparatus 121), statistical model generating section 143 that periodically updates and sets complex impulse response using random numbers, and actual run model generating section 144 that reads complex impulse response information obtained from Ray-Trace simulation, actual running experiments and so on to sequentially update and set, and selects in selection section 145 a channel model of a single channel generated in either of the model generating sections 142 to 144 to output.

By this means, reference channel model forming section 140 forms the complex impulse response information (including the number of paths and delay and complex gain of each path) of the reference channel that varies at intervals of several dozen meters. In addition, each of the model generating sections 142 to 144 is of well-known techniques, and descriptions thereof are omitted herein.

Instantaneous variation initial value generating section 141 generates an instantaneous variation initial value of each path of the reference channel to be a random value using random numbers. In addition, control apparatus 121 inputs to reference channel model generating section 140 parameter P10 (model type instruction to instruct a run model to select, traveling speed and direction, arrangements and directionalities of transmission and reception antennas, and ON/OFF instruction of phase variation). Further, control apparatus 121 inputs parameter P11 (the number of paths and delay and complex gain of each path) to standard model generating section 142. Furthermore, control apparatus 121 inputs parameter P12 (Ray-Trace/actual running experiment data) to actual run model generating section 144.

As a reference channel model, selecting section 145 outputs parameter P14 (carrier frequency, traveling speed and direction, arrangements and directionalities of transmission and reception antennas, and ON/OFF instruction of phase variation), and parameter P15 (the number of path divisions (in compression), the number of paths of the reference channel, and delay, short-term variation complex gain, the angle of arrival and the line-of-sight angle of each path of the reference channel).

FIG.25 illustrates a configuration of each of channel processing sections 126-1 to 126-MN. The configuration of each of channel processing sections 126-1 to 126-MN is the same, and described below is the configuration of channel processing section 126-1. In channel processing section 126-1, parameters P14 and P15 are input to assigned-channelshort-term complex impulse response generating section 150.

Assigned-channel short-term complex impulse response generating section 150 calculates a difference in distance between the reference channel and the assigned channel from the arrangements of transmission and reception antennas, calculates the complex gain of the short-term variation of each path of the assigned channel based on the difference in distance, and outputs the gain to data interpolation section 151 as parameter P18, while outputting the number of paths of the assigned channel, the delay, the angle of arrival and the line-of-sight angle of each path to correlated gaussian noise generating section 152 as parameter P20.

In other words, assigned-channel short-term complex impulse response generating section 150 assumes that gains in long-term variations and short-term variations of each path included in short-term complex impulse response are equal in an area where transmission and reception antennas are installed, thereby further assumes that the assigned-channel and reference channel have the same number of paths, and that only the delay and phase of each path differ by a difference in distance obtained from transmission and reception points of the reference channel and assigned channel, a positional relationship between transmission and reception antennas of the assigned channel, and the radiation direction and the direction of arrival of each path, and thus, generates complex impulse response of the assigned channel.

More specifically, path forming section 190 (FIG.30) described later generates the delay, and assigned-channel short-term complex impulse response generating section 150 generates the complex gain with levels of the I component and Q component controlled corresponding to variations in phase.

Data interpolation section 151 performs data interpolation on the complex impulse response, thereby performing upconverting, and outputs the resultant to short-term variation adding section 155 in fading adding section 154. In this way, channel processing section 126-1 is provided with data interpolation section 151, and therefore, even when the processing operation prior to data interpolation section 151 is slow to some extent, is capable of adding fine variations corresponding to sampling frequency $f_s$ of a baseband signal. The same relationship exists between data interpolation section 153 and correlated gaussian noise generating section 152.

Correlated gaussian noise generating section 152 receives parameters P14, P15 and P20, and generates the correlated gaussian noise of each path of the assigned channel. In other words, in channel simulator 120 of this Embodiment, correlated gaussian noise generating sections 152 respectively in channel processing sections 126-1 to 126-MN form correlated instantaneous variations of MN channels having correlation between channels, or between channels and paths.

Correlated instantaneous variation P16 (including information of the number of paths and delay of each path, as well as the complex gain in instantaneous variation of each path) is interpolated in data interpolation section 153, and output to correlated instantaneous variation adding section 156. In addition, the information of the number of paths and delay of each path is used as information to form multipath having delays corresponding to the antenna arrangement as described later.

FIG.26 illustrates a configuration of correlated gaussian noise generating section 152. Correlated gaussian noisegeneratingsection152generatesmultitone having an initial phase of an initial value of the instantaneous value of each path of the reference channel, as the gaussian noise with a frequency band corresponding to the angle of arrival and line-of-sight angle of each path of the reference channel, performs weighting on the multitone with a Doppler filter and correlated filter characteristics using the antenna arrangement information as a parameter, and thus, forms the correlated instantaneous variation correlated with the instantaneous variation of the reference channel. In other words, the Sasaoka method as described above is applied.

More specifically,multitone generating section161 generates multitone having as an initial phase an initial value of the instantaneous variation of each path of the assigned channel generated in instantaneous variation initial value generating section 160. The multitone is limited to a predetermined band within Doppler frequency $f_D$ by Doppler filter 162, and output to filter 165A with filter characteristics of equation (12).

Meanwhile, multitone generating section 163 generates multitone having an initial phase corresponding to an initial value of the instantaneous variation of each path of the reference channel generated in instantaneous variation initial value generating section 141 (FIG.24). The multitone is limited to a predetermined band within Doppler frequency $f_D$ by Doppler filter 164, and output to filter 165B with filter characteristics of equation (11).

At this point, Doppler filters 162 and 164 have the carrier frequency and traveling speed and direction input thereto, corresponding to which, characteristics of Doppler filters 162 and 164 are determined. Further, correlation filter section 165 has the carrier frequency, traveling speed and direction, arrangements and directionalities of transmission and reception antennas, the angle of arrival and line-of-sight angle of each path input thereto, corresponding to which, characteristics of each of the filters 165A and 165B are determined.

An output from correlation filter section 165 is added in adder 166, and input to phase variation ON/OFF section167. Phase variation ON/OFF section 167 controls ON/OFF of phase variation of the correlated gaussian noise corresponding to an instruction on phase variation ON/OFF from control apparatus 121. More specifically, when being instructed to control the phase variation ON, the section 167 outputs the correlated gaussian noise input from adder 166 without any processing.

Meanwhile, when being instructed to control the phase variation OFF, the section 167 obtains envelop amplitude $\sqrt{(I^2+Q^2)}$ of variation values of the I channel and Q channel of the correlated gaussian noise, and outputs the obtained envelop amplitude of variation values as signals of the I channel and Q channel. In other words, the correlated gaussian noise with the I channel and Q channel of the same level is formed as an instantaneous variation value, and it is thereby intended that a subsequent section, correlated instantaneous variation adding section 156, only adds a level variation without adding a phase variation. The reason will be described later.

An output of phase variation ON/OFF section 167 is output to correlated instantaneous variation adding section 156 via delay section 168, as the instantaneous variation of the assigned channel.

Thus, correlated gaussian noise generating section 152 provided for each channel obtains a correlated instantaneous variation correlated with the instantaneous variation of the reference channel, and it is thereby possible to form correlated instantaneous variations of MxN channels correlated with the reference channel from the information of each path of the reference channel. As a result, it is possible to simulate instantaneous variations of MxN channels with accuracy and ease, as compared with the case of independently setting the instantaneous variations of MxN channels.

In addition, the case is described herein of obtaining correlated instantaneous variations correlated with the reference channel using multitone. Further, it may be possible that multitone generating sections 161 and 163 simplygenerate white gaussian noises, Doppler filters 162 and 164 are set for filter characteristics to only pass a band in consideration of the direction of arrival of a path, and thereby correlated instantaneous variations of MxN channels are

obtained.

In other words, without being limited to the case of generating multitone and generating correlated instantaneous variations correlated with instantaneous variation of the reference channel, it may be possible to form correlated instantaneous variations of MxN channels by generating band-limited gaussian noises of the reference channel and of another channel, performing weighted addition on the two band-limited gaussian noises with correlated filter characteristics having at least antenna arrangement information as a parameter, thereby forming a correlated instantaneous variation correlated with the instantaneous variation of the reference channel, and performing the aforementioned processing corresponding to MxN channels.

(2-2-2) Case of using the eigenvalue transformation method

With reference to FIGs.27, 28 and 29, described below are configurations of the reference channel path control section, channel processing section and correlated gaussian noise generating section in the case of using the eigenvalue transformation method.

FIG.27 illustrates a configuration of reference channel path control section 170 (that corresponds to reference channel path control section 127 in FIG.22) in the case of using the eigenvalue transformation method, with the same sections as in FIG.24 assigned the same reference numerals. Unit eigenvector calculating section 171 as transformation matrix calculating means receives the information of arrangements and directionalities of transmission and reception antennas and the information of the angle of arrival and line-of-sight angle of each path of the reference channel among parameters P14 and P15 output from reference channel model forming section 140.

Unit eigenvector calculating section 171 first obtains a correlation matrix from the positional relationship of transmission and reception antennas, the radiation direction and angle of arrival of a signal of the reference channel and theoretical correlation values Rayleigh fading (using the spatio correlation function of eq.(1) in only obtaining the correlation between channels, while using the spatio-temporal correlation function of eq. (2) in obtaining the correlation between channels and paths). The matrix has MxN rows and MxN columns when obtaining a correlation matrix between channels, while having MxNx(the number of paths) rows and MxNx(the number of paths) columns in obtaining a correlation matrix between channels and paths.

As described in item (1-3-1), unit eigenvector calculating section 171 calculates a unit eigenvector (actually, which is conjugate complex transpose of the unit eigenvector) based on equations (3), (4) and (5), and then, outputs the eigenvector to correlated gaussian noise generating section 173 as a transformation matrix to calculate mutually correlated signal vectors from non-correlated signal vectors. Actually, unit eigenvector calculating section 171 generates an initial value of the instantaneous variation of each path of each channel as well as the unit eigenvector, and outputs these values as parameter P30 to correlated gaussian noise generating section 173 in channel processing section 172 as shown in FIG.28.

A configuration of channel processing section 172 in FIG.28 is the same as the configuration as shown in FIG.25 except correlated gaussian noise generating section 173 having a different configuration, and only the configuration of correlated gaussian noise generating section173willbedescribedherein. FIG.29illustrates the configuration of correlated gaussian noise generating section 173.

Correlated gaussian noise generating section 173 generates the number (MxNx(the number of paths) of instantaneous variations mutually independent between channels and paths in Doppler filter 180. More specifically, an initial value of the instantaneous variation of each path of channel 1-1 is input to band-limited white gaussian noise generating section (LWGN) 181-1, an initial value of the instantaneous variation of each path of channel 1-2 is input to band-limited white gaussian noise generating section 181-2, similar processing is repeated subsequently, and finally, an initial value of the instantaneous variation of each path of channel M-N is input to band-limited white gaussian noise generating section 181-MN, whereby band-limited white gaussian noise generating sections 181-1 to 181-MN generate mutually independent band-limited white gaussian noises. The mutually independent band-limited white gaussian noises are limited to bands within Doppler frequency $f_D$ in respective Doppler filters 182-1 to 182-MN, and then, output to weighted addition section 183.

Weighted addition section 183 as matrix operation means performs the matrix operation processing using an eigenvector of the assigned channel on the MxNx (the number of paths) instantaneous variations mutually independent between channels and paths obtained in Doppler filer 180, and thereby obtains correlated instantaneous variations mutually correlated between paths. In addition, the correlated instantaneous variations have the correlation also between channels.

The correlated instantaneous variations output from weighted addition section 183 are output to correlated instantaneous variation adding section 156 (FIG.28) via phase ON/OFF section 184, as respective instantaneous variations of paths of the assigned-channel.

Thus, MxNx(the number of paths) instantaneous variations are generated which are mutually independent between channels and paths, a correlation matrix ((MxNx(the number of paths) x ((MxNx(the number of paths)) is

obtained from input data or experiment data, a difference in propagation path distance of each path is obtained from the positional relationship of antennas, and theoretical temporal-spatio correlation values of Rayleigh fading, a transformation matrix is obtained based on the correlation matrix to calculate mutually correlated signal vectors from mutually non-correlated signal vectors, and MxNx(the number of paths) instantaneous variations are subjected to the matrix operation processing using the transformation matrix, thereby obtaining MxNx(the number of paths) correlated instantaneous variations mutually correlated between paths. Therefore, it is possible to obtain correlated instantaneous variations mutually correlated between channels and paths, and it is thereby possible to perform channel simulation on MxN channels with multipath accurately and readily.

Similarly, MxNx (the number of paths) instantaneous variations are generated which are mutually independent between channels, a correlation matrix (MxN x MxN) is obtained from input data or experiment data, a difference in propagation path distance of each path is obtained from the positional relationship of antennas, and theoretical spatio correlation values of Rayleigh fading, a transformation matrix is obtained based on the correlation matrix to calculate mutually correlated signal vectors from mutually non-correlated signal vectors, and the plurality of instantaneous variations are subjected to the matrix operation processing using the transformation matrix the number of times corresponding to the number of path, thereby obtaining MxN-channel correlated instantaneous variations mutually correlated between channels. By this means, it is possible to obtain correlated instantaneous variations of MxN channels having correlation between all the channels, as well as correlation between the reference channel and each channel. As a result, it is possible to form instantaneous variations closer to instantaneous variations occurring in actual MxN channel transmission.

In addition, while the case is descried herein of forming correlated instantaneous variations using the eigenvalue transformation method, the similar configuration enables formation of correlated instantaneous variations using the Cholesky factorization method as described above.

As explained briefly, instead of calculating the eigenvector, as described in item (1-3-2), unit eigenvector calculating section 171 in FIG.27 performs Cholesky factorization on the path correlation matrix to obtain a lower triangular matrix, calculates a conjugate complex transpose matrix of the matrix, based on equations (6) and (7), and outputs the resultant to correlated gaussian noise generating section 173 in channel processing section 172.

Incorrelated gaussian noise generating section173, the transformation matrix obtained by Cholesky factorization is input to weighted addition section 183 as matrix operation means, weighted addition is performed using the transformation matrix, and correlated instantaneous variations are thereby obtained. By this means, weighted addition section 183 performs the operation using the transformation matrix with half elements thereof of zero, and thus is capable of obtaining correlated instantaneous variations with a small amount of calculations.

(2-3) Configuration of the fading adding section

FIG.30 illustrates a configuration of the fading adding section provided in each of channel processing sections 126-1 to 126-MN. Fading adding section 154 receives a digital baseband signal output from switch 125 (FIG.22) in path forming section 190 comprised of shift register 191 and selector 192, and forms a signal of each path using path forming section 190. More specifically, shift register 191 shifts the input digital baseband signal by time obtained by dividing a maximum delay time of the path by a sampling cycle in analog BB processing section 42 (FIG.21).

Selector 192 selects and outputs signals corresponding to the number of paths from among respective signals output from shift stages of shift register 191. At this point, path forming section 190 receives as its inputs the number of paths instructed from control apparatus 121 and parameter P11 indicative of delay time corresponding to the arrangements of transmission and reception antennas on a signal of each channel, and based on P11, shift register 191 and selector 192 operate. In this way, selector 192 in path forming section 190 outputs a signal of each path provided with a path delay on the assigned channel corresponding to the arrangements of transmission and reception antennas.

The signal corresponding to each path is output to respective one of complex multipliers A1 to Ak in correlated instantaneous variation adding section 156. Further, each of complex multipliers A1 to Ak is supplied with correlated gaussian noise P17 output from data interpolation section 153. By this means, each of complex multipliers A1 to Ak outputs a signal of each path provided with the correlated instantaneous variation.

The signal of each path provided with the correlated instantaneous variation is output to respective one of a plurality of complex multipliers, B1 to Bk, constituting short-term variation adding section 155. Each of complex multipliers B1 to Bk is supplied with complex gain P19 of the short-term variation of each path output from data interpolation section 151. Short-term variation adding section 155 thereby outputs the signal of each path convoluted with complex impulse response. The signal of each path is all added in adders C1, C2, ...... , thereby forming a multipath signal in which channel variations are reflected.

The multipath signal is supplied to adder C3. Adder C3 is supplied with the white gaussian noise which is generated in white gaussian noise generating section (WGN) 21 and amplified in amplifier 22 to noise level S4 designated from control apparatus 30. Thus, adder C3 adds receiver noise to the multipath signal.

Fading adding section 154 further has automatic gain control section 193. In automatic gain control section 193, AGC control section 195 receives a target level from control apparatus 121, and thereby sets as an amplification value of amplifier 194 a difference value between the target level and an output signal of amplifier 194. As a result, automatic gain control section 193 performs simplified digital gain control processing, and is capable of making the multipath signal a constant signal with the target level.

The reason why it is necessary to perform gain control on a multipath signal is because the multipath signal resulting from addition by adder C1 is obtained by adding respective signals of paths each provided with the level variation independently, and it is assumed that the level variation occurs in the digital baseband signal. In consideration thereof, gain control section 193 executes the simplified digital gain control processing to make the level of a multipath signal constant, and it is thereby possible to prevent a bit from being lost in AD conversion in reception system 50 of the development apparatus even when radio circuit 53 (FIG.21) is not completed and the AGC processing cannot be carried out. As a result, it is possible to evaluate channel characteristics on a multipath channel with excellence based on the digital baseband signal of digital BB processing section 41.

Further, in channel simulator 120 of this Embodiment, a digital baseband signal is input from digital BB processing section 41 of the transmission system, the signal is provided with channel variations, and the resultant signal is output to digital BB processing section 51 of reception system 50. In evaluating propagation characteristics of digital BB processing sections 41 and 51, phase variation ON/OFF sections 167 (FIG.26) and 184 (FIG.29) are set for OFF, and the correlated instantaneous variation with the I channel and Q channel of the same level is input to correlated instantaneous variation adding section 156. This is not shown in the figure, but is the same as in the short-term variation supplied to short-term variation adding section 153.

By this means, even when AFC of radio circuit 53 is not available, it is possible to evaluate performance of digital BB processing sections 41 and 51 . In addition, in a stage where radio circuits 43 and 53 are connected, since the AGC function and AFC function due to radio circuit 53 serve, each of complex multipliers A1 to Ak and B1 to Bk may multiply a complex gain of the short-term variation such that envelop amplitude is different between the I channel and Q channel to provide a digital baseband signal with a phase variation.

(2-4) Configurations of the transmission analog adjusting section and reception analog adjusting section

Described below are configurations of transmission analog adjusting section 124 and reception analog adjusting section 129. Transmission analog adjusting section 124 and reception analog adjusting section 129 are to simulate fluctuations in a signal of each channel occurring due to fluctuations in performance of analog circuitry corresponding to the each channel among MxN channels.

In other words, attention was directed toward the fact that development apparatuses 40 and 50 targeted for simulation have M analog circuits on the transmission side and N analog circuits on the reception side, and that fluctuations between the MxN analog circuits affect signals on channels, and transmission analog adjusting section 124 and reception analog adjusting section 129 simulate the fluctuations between the channels to add to a digital baseband signal as appropriate. It is thereby possible to simulate propagation variations in MxN-channel transmission more closely approximating real variations.

As a result, in channel simulator 200, even if development of radio circuit 43 of transmission system 40 and radio circuit 53 of reception system 50 has not been completed, it is possible to add signal deterioration assumed to occur in radio circuits 43 and 53 to the digital baseband signal to evaluate characteristics of digital BB processing sections 41 and 51.

As a result, it is possible to evaluate channel characteristics of digital BB processing sections 41 and 51 including appropriateness between digital BB processing sections 41 and 51 and radio circuits 43 and 53. Further, it is possible to beforehand measure an extent of deterioration to occur in radio circuits 43 and 53 subsequently developed with the performance of digital BB processing sections 41 and 51 meeting a desired value.

Configurations of transmission analog adjusting section 124 and reception analog adjusting section 129 will specificallybe described below. As shown in FIG.31, in transmission analog adjusting section 124, a baseband signal from switch 125 (FIG.22) is input to gain unbalance generating section 210. Gain unbalance generating section 210 amplifies the I channel signal and Q channel signal of the digital baseband signal independently, and thereby generates a gain difference. DC offset adding section 211 increases or decreases each of the I channel signal and Q channel signal by a constant value, and thereby adds the DC offset.

Frequency offset • phase offset adding section 212 adds the frequency offset and phase offset assumed to occur in radio circuit 43 and analog circuit 123 (FIG.22) to the I channel signal and Q channel signal. Actually, frequency offset • phase offset adding section 212 is comprised of a complex multiplier which multiplies each channel signal by variation amount cos $\theta 1$ or sin $\theta 2$ respectively corresponding to instantaneous phase $\theta 1$ or $\theta 2$.

In other words, the I channel signal is multiplied by variation amount cos $\theta 1$, while the Q channel signal is multiplied by variation amount sin $\theta 2$. Herein, instantaneous phases $\theta 1$ and $\theta 2$ made constant means only adding the

phase offset, while instantaneous phases θ1 and θ2 varying with time means adding the frequency offset in addition to the phase offset.

In obtaining instantaneous phases θ1 and θ2, transmission analog adjusting section 124 calculates a phase rotation amount per sample from frequency offset set value S20E in phase increment calculating section 215 to output to mod 2π calculating circuits 217 and 219. At this point, to add deterioration in orthogonality between the I channel signal and Q channel signal, adder 218 adds orthogonality deterioration amount S20F to a phase rotation amount of the Q channel signal.

A phase of the last sample is input to adder 216. The phase of the last sample is calculated by Z-1 calculating circuit 222 performing computation based on an initial phase (i.e. phase offset) S20D and the phase of the last sample. Adder 216 adds the phase rotation amount corresponding to one sample calculated in phase increment calculating circuit 215 to the phase of the last sample, and thereby obtains a phase rotation amount of a current sample.

Thus, by repeating a processing loop of adder 216, mod 2π calculating circuit 217 and Z-1 calculating circuit 222, I channel instantaneous phase θ1 provided with the phase offset and frequency offset is calculated for each sample, and Q channel instantaneous phase θ2 is calculated by adding the deterioration amount of orthogonality to I channel instantaneous phase θ1.

Then, frequency offset phase offset adding section 212 adds variation amount cosθ1 and variation amount sinθ2 respectively to the I channel and Q channel of the digital baseband signal, and thereby adds the frequency offset and phase offset on each channel of the digital baseband signal assumed to occur in radio circuit 43 of transmission system 40 and analog circuit 123. Delay adjusting section 213 adds a circuit delay amount assumed to occur in radio circuit 43 and the analog circuit.

Pseudo power amplifier (PA) section 214 is to generate simulated non-linear distortion assumed to occur in an amplifying section of radio circuit 43, and for example, is configured as shown in FIG.32. Pseudo PA section 214 calculates $\sqrt{(I^2+Q^2)}$ in envelop amplitude calculating section 230, and thereby calculates envelop amplitude X of the digital baseband signal to output to averaging circuit 231 and distortion calculating section 232.

Averaging circuit 231 averages the envelop amplitude for a time corresponding to forgetting factor (i.e. level calculation time constant) S20H set by control apparatus 121, and outputs obtained average value Pave to saturation level computation circuit 233. Saturation level computation circuit 233 obtains saturation level Asat in the following equation, assuming the average value of envelop amplitude as Pave and backoff of the power amplifier set in control apparatus 121 as IBO.

$$A_{sat}=P_{ave}\times 10^{-\frac{IBO}{20}} \qquad (13)$$

Distortion computation section 232 calculates a control value of amplifier 234 in the following equation, using the envelop amplitude value X obtained in envelop amplitude calculating circuit 230 and saturation level Asat obtained in saturation level computation circuit 233.

$$\text{Control value} = \frac{1}{\left\{1+\left(\frac{|x|}{A_{sat}}\right)^{10}\right\}^{\frac{1}{10}}} \qquad \cdots\cdots (14)$$

In this way, pseudo power amplifier (PA) section 214 is capable of adding simulated non-linear distortion assumed to occur in the amplifying section of radio circuit 43 to the digital baseband signal.

Reception analog adjusting section 129 is configured as shown in FIG.33. In reception analog adjusting section 129, the digital baseband signal output from selection combining section 128 (FIG.22) is input to frequency offset · phase offset adding section 251.

Frequency offset · phase offset adding section 251 performs the same processing as in frequency offset· phase offset adding section 212 of transmission analog adjusting section 124. In other words, the section 251 adds the frequency offset and phase offset assumed to occur in radio circuit 53 of reception circuit 50 and analog circuit 131 (FIG. 22) to I and Q channels. Actually, frequency offset · phase offset adding section 251 is comprised of a complex multiplier which multiplies each channel signal by variation amount cosθ1' or sinθ2' respectively corresponding to instantaneous phase θ1' or θ2'. In other words, the I channel signal is multiplied by variation amount cos θ1', while the Q channel signal is multiplied by variation amount sinθ2' .

In obtaining instantaneous phases θ1' and θ2', reception analog adjusting section 129 calculates a phase rotation amount per sample from frequency offset set value S22B in phase increment calculating section 252 to output to mod 2π calculating circuits 254 and 256. At this point, to add deterioration in orthogonality between the I channel signal and Q channel signal, adder 255 adds orthogonality deterioration amount S22C to a phase rotation amount of the Q channel signal.

A phase of the last sample is input to adder 253. The phase of the last sample is calculated by Z-1 calculating circuit 259 performing computation based on an initial phase (i.e. phase offset) S22A and the phase of the last sample. Adder 253 adds the phase rotation amount corresponding to one sample calculated in phase increment calculating circuit 252 to the phase of the last sample, and thereby obtains a phase rotation amount of a current sample.

Then, frequency offset · phase offset adding section 251 adds variation amount cosθ1' and variation amount sinθ2' respectively to the I channel and Q channel of the digital baseband signal, and thereby adds the frequency offset and phase offset on each channel of the digital baseband signal assumed to occur in radio circuit 53 of reception system 50 and analog circuit 131.

Gain unbalance generating section 261 amplifies the I channel signal and Q channel signal of the digital baseband signal independently, and thereby generates a gain difference. DC offset adding section 262 increases or decreases each of the I and Q channels by a constant value, and thereby adds the DC offset. Delay adjusting section 263 adds a circuit delay amount assumed to occur in radio circuit 53 and analog circuit 131.

A user is capable of selecting arbitrarily via control apparatus 121 various set values S20 (S20A to S20I) and S22 (S22A to S22H) of transmission analog adjusting section 124 and reception analog adjusting section 129.

Thus, it is possible to simulate gain unbalance, DC offset, frequency offset, phase offset, circuit delay, non-linear distortion in amplification, and so on assumed to occur in radio circuits 43 and 53 and analog circuits 123 and 131, prior to completion of radio circuit 43 of transmission system 40 and radio circuit 53 of reception system 50, i.e. at the stage where digital BB processing sections 41 and 51 have onlybeen completed. It is thereby possible to evaluate characteristics of digital BB processing sections 41 and 51 in combining digital BB processing sections 41 and 51 under development and radio circuits 43 and 53 with various characteristics.

(3) Effects of the Embodiment

Thus, according to the aforementioned constitution, by providing switch 125 which makes N copies of each of M signals obtained in transmission system 40, and thereby forms MxN channel signals, channel processing sections 126-1 to 126-MN which respectively add correlated instantaneous variations and short-term variations corresponding to arrangements of transmission and reception antennas to the MxN channel signals, and selection combining section 128 which selectively combines M signals repeatedly among the MxN signals provided with channel variations to form N signals, it becomes possible to simulate channel variations actually occurring in a multi-antenna apparatus, and it is thereby possible to simulate channel characteristics in the multi-antenna apparatus with accuracy and ease.

The present invention is not limited to the aforementioned Embodiment, and is capable of being carried into practice with various modifications thereof.

A channel simulation method according to an aspect of the invention includes a.channel variation forming step of forming a channel variation on each of MxN channels using information of arrangements of transmission and reception antennas, and a channel variation adding step of adding channel variations corresponding to the MxN channels to respective signals of the MxN channels.

According to this method, the channel variations of all the MxN channels are formed from the information of arrangements of transmission and reception antennas, and it is thereby possible to form channel variations in MxN-channel transmission formed by the multi-antenna apparatus with accuracy and ease. Further, in the case of collecting channel data in running experiments to reproduce, data corresponding to a single channel is collected by a data collection apparatus having a transmission antenna and a reception antenna, and using the data as reference channel data, channel variations in MxN-channel transmission can be formed accurately and readily from the reference channel data and relative arrangements of transmission and reception antennas of a development apparatus. Thus, the memory for data storage can be saved largely, the number of times of running experiment thereby decreases drastically, and it is possible to improve efficiency in development.

In a channel simulation method of another aspect of the invention, in the channel variation forming step, a delay and a phase variation on each channel due to the arrangements of antennas are obtained using the information of arrangements of transmission and reception antennas, and channel variations are formed such that the delay and the phase variation vary with the channels.

According to this method, channels variations of the MxN channels are formed by only varying the delay and the phase variation on each of the channels caused by the arrangements of the antennas, and it is thereby possible to form the channel variations of the MxN channels with ease.

In a channel simulation method of still another aspect of the invention, in the channel variation forming step,

in forming a short-term variation on each channel as a channel variation, short-term variations corresponding to MxN channels are formed by obtaining a difference in path distance between each path of a reference channel beforehand set or prepared and pertinent each path of each channel using information of a positional relationship between transmission and reception antennas on each channel and information of a radiation direction and a direction of arrival on each path, and for a signal of pertinent each path of each channel, generating a short-term variation such that a phase difference occurs with respect to a short-term variation of each path of the reference channel by the difference in path distance.

According to this method, by regarding the number of paths on each channel and gains on paths as being equal since a distance between transmission antennas and a distance between reception antennas are sufficiently smaller than a short-term variation period, the short-term variation is formed such that a phase difference occurs with respect to the short-term variation of each path of the reference channel by the difference in path distance, whereby it is possible to form short-term variations of all MxN channels from a channel model of the reference channel, and thus, preparing beforehand only the channel model of the reference channel enables the short-term variations of the MxN channels to be formed with ease and accuracy.

In a channel simulation method of a further aspect of the invention, in the channel variation forming step, in forming an instantaneous variation on each channel as a channel variation, correlated instantaneous variations corresponding to MxN channels are formed by repeating processing, the number of times corresponding to MxN channels, for generating respective band-limited gaussian noises corresponding to the reference channel and another channel, subjecting two band-limited gaussian noises to weighted addition with correlated filter characteristics using at least the information of arrangements of antennas as a parameter, and thereby forming a correlated instantaneous variation correlated with the instantaneous variation on the reference channel.

According to this method, it is possible to form MxN-channel correlated instantaneous variations correlated with the reference channel from the information of each path of the reference channel, and it is thus possible to form instantaneous variations of MxN channels with accuracy and ease, as compared to the case of independently setting instantaneous variations of MxN channels. In other words, this method is to expand the method by Sasaoka conventionally proposed as a method of generating two-channel correlated instantaneous variations so as to generate MxN-channel correlated instantaneous variations.

In a channel simulation method of a still further aspect of the invention, the channel variation forming step includes the steps of generating MxNx(the number of paths) instantaneous variations mutually independent between channels, obtaining an (MNxMN) correlation matrix from a difference in propagation path distance of each path obtained from input data or experiment data and the positional relationship of antennas, and theoretical spatio correlation values of Rayleigh fading, obtaining based on the correlation matrix a transformation matrix to calculate mutually correlated signal vectors from signal vectors that are not correlated with one another, and obtaining MxNx(the number of paths) correlated instantaneous variations correlated between channels, by repeating, the number of times corresponding to the number of paths, matrix operation processing using the transformation matrix for each instantaneous variation of a pertinent path of each channel.

According to this method, as well as the correlation between the reference channel and each channel, it is possible to form MxNx(the number of path) correlated instantaneous variations correlated between all the channels. As a result, it is possible to form instantaneous variations closer to instantaneous variations occurring in actual MxN-channel transmission.

In a channel simulation method of a yet further aspect of the invention, the channel variation forming step includes the steps of generating MxNx(the number of paths) instantaneous variations mutually independent between channels and between paths, obtaining an (MNx (the number of paths)xMNx(the number of paths)) correlation matrix from a difference in propagation path distance of each path obtained from input data or experiment data and the positional relationship of antennas, and theoretical temporal-spatio correlation values of Rayleigh fading, obtaining based on the correlation matrix a transformation matrix to calculate mutually correlated signal vectors from signal vectors that are not correlated with one another, and obtaining MxNx (the number of paths) correlated instantaneous variations correlated between the paths, by performing matrix operation processing using the transformation matrix on the MxNx(the number of paths) instantaneous variation.

According to this method, correlated instantaneous variations are obtained that are correlated between channels and between paths, and it is thereby possible to also perform simulations in MxN-channel multipath transmission accurately and readily.

In a channel simulation method of a yet further aspect of the invention, in the step of obtaining a transformation matrix, the transformation matrix is obtained by eigenvalue transformation.

According to this method, in obtaining correlated instantaneous variations from mutually independent instantaneous variations, it is possible to use a matrix (eigenvalue) with a small number of elements, instead of using a matrix with $(MxN)^2$ or (MxNx(the number of paths$)^2$ elements, and thus, the correlated instantaneous variations can be obtained with a small amount of calculations.

In a channel simulation method of a yet further aspect of the invention, in the step of obtaining a transformation matrix, the transformation matrix is obtained by Cholesky factorization.

According to this method, in obtaining correlated instantaneous variations from mutually independent instantaneous variations, a lower triangular matrix obtained by Cholesky factorization is used, instead of using a matrix with $(MxN)^2$ or $(MxNx \text{ (the number of paths)})^2$ elements, and thus, the correlated instantaneous variations can be obtained with a small amount of calculations.

A channel simulator of an aspect of the invention is a channel simulator that simulates channel characteristics of a wireless apparatus using an MxN-channel transmission system using M transmission antennas and N reception antennas, and has a configuration provided with an input section which inputs M signals obtained by a transmission system of the wireless apparatus, a signal replicating section which makes N copies of each of the M signals, and thereby forms MxN channel signals, a channel processing section that adds a channel variation to each of the MxN channel signals corresponding to arrangements of transmission and reception antennas, and a combining section that selectively combines M channel signals repeatedly among the MxN channel signals each provided with the channel variation to form N signals.

According to this configuration, it is possible to simulate channel variations actually occurring in a multi-antenna apparatus, and it is thus possible to simulate channel characteristics in the multi-antenna apparatus with accuracy and ease.

In a channel simulator of another aspect of the invention, the channel processing section is provided with a path forming section that forms a signal of each path having a delay corresponding to the arrangements of transmission and reception antennas for a signal of each channel, a short-term complex impulse response generating section that forms a complex gain of a short-term variation to be added to each path of each channel, and a short-term variation adding section that adds the short-term variation to the signal of each path of the each channel, and the short-term complex impulse response generating section obtains a difference in path distance between each path of a reference channel and pertinent each path of each channel using information of a positional relationship between transmission and reception antennas on each channel and a radiation direction and a direction of arrival on each path, and for the signal of each path of each channel generated in the path forming section, generates a short-term variation such that a phase difference occurs with respect to a short-term variation of each path of the reference channel beforehand set or prepared by the difference in path distance.

According to this configuration, it is possible to form short-term variations of all MxN channels from a channel model of the reference channel, and thus, preparing beforehand only the channel model of the reference channel enables the short-term variations of the MxN channels to be formed with ease and accuracy.

A channel simulator of still another aspect of the invention adopts a configuration where the channel processing section is provided with a path forming section that forms a signal of each path having a delay corresponding to the arrangements of transmission and reception antennas for a signal of each channel, a correlated gaussian noise generating section that generates a correlated instantaneous variation to be added to each path of each channel, and a correlated instantaneous variation adding section that adds the correlated instantaneous variation to the signal of each path of each channel.

According to this configuration, as compared with the case of independently setting MxN-channel instantaneous variations, it is possible to excellently simulate MxN-channel instantaneous variations assumed to actually occur in a multi-antenna apparatus to add to the signal of each path provided with the delay corresponding to the arrangements of transmission and reception antennas.

A channel simulator of a further aspect of the invention adopts a configuration where the correlated gaussian noise generating section forms correlated instantaneous variations corresponding to MxN channels by repeating processing, the number of times corresponding to MxN channels, for generating respective band-limited gaussian noises corresponding to the reference channel and another channel, subjecting two band-limited gaussian noises to weighted addition with correlated filter characteristics using at least the information of arrangements of antennas as a parameter, and thereby forming a correlated instantaneous variation correlated with the instantaneous variation on the reference channel.

According to this configuration, it is possible to form MxN-channel correlated instantaneous variations correlated with the reference channel from the information of each path of the reference channel, and it is thus possible to form MxN-channel instantaneous variations with accuracy and ease, as compared to the case of independently setting MxN-channel instantaneous variations. In other words, this method is to expand the method by Sasaoka conventionally proposed as a method of generating two-channel correlated instantaneous variations so as to generate MxN-channel correlated instantaneous variations.

A channel simulator of a still further aspect of the invention adopts a configuration further provided with a transformation matrix calculating section which obtains a correlation matrix from a difference in propagation path distance of each path obtained from input data or experiment data and the positional relationship of antennas and theoretical spatio correlation values of Rayleigh fading, and then, based on the correlation matrix, obtains a transformation

matrix to calculate mutually correlated signal vectors from signal vectors that are not correlated with one another, where the correlated gaussian noise generating section is provided with an instantaneous variation generating section that generates MxNx(the number of paths) instantaneous variations mutually independent between channels, and a matrix operation section that generates MxNx (the number of paths) correlated instantaneous variations correlated between channels, by repeating matrix operation processing using the transformation matrix on the instantaneous variations the number of times corresponding to the number of paths.

According to this configuration, as well as the correlation between the reference channel and each channel, it is possible to form MxNx (the number of path) correlated instantaneous variations correlated between all the channels. As a result, it is possible to form instantaneous variations closer to instantaneous variations occurring in actual MxN-channel transmission.

A channel simulator of a yet further aspect of the invention adopts a configuration further provided with a transformation matrix calculating section which obtains a correlation matrix from a difference in propagation path distance of each path obtained from input data or experiment data and the positional relationship of antennas and theoretical temporal-spatio correlation values of Rayleigh fading, and then, based on the correlation matrix, obtains a transformation matrix to calculate mutually correlated signal vectors from signal vectors that are not correlated with one another, where the correlated gaussian noise generating section is provided with an instantaneous variation generating section that generates MxNx(the number of paths) instantaneous variations mutually independent between channels and between paths, and a matrix operation section that generates MxNx(the number of paths) correlated instantaneous variations correlated between the paths, by performing matrix operation processing using the transformation matrix on the instantaneous variations.

According to this configuration, correlated instantaneous variations are obtained which are correlated between channels and between paths, and it is thereby possible to simulate characteristics in MxN-channel multipath transmission accurately and readily.

A channel simulator of a yet further aspect of the invention adopts a configuration where the transformation matrix calculating section obtains a transformation matrix by eigenvalue transformation.

According to this configuration, in obtaining correlated instantaneous variations from mutually independent instantaneous variations in the matrix operation section, it is possible to use a matrix (eigenvalue) with a small number of elements, instead of using a matrix with $(MxN)^2$ or $(MxNx(\text{the number of paths}))^2$ elements, and thus, it is possible to reduce an amount of calculations in the matrix operation section.

A channel simulator of a yet further aspect of the invention adopts a configuration where the transformation matrix calculating section obtains a transformation matrix by Cholesky factorization.

According to this configuration, in obtaining correlated instantaneous variations from mutually independent instantaneous variations in the matrix operation section, a lower triangular matrix obtained by Cholesky factorization is used, instead of using a matrix with $(MxN)^2$ or $(MxNx(\text{the number of paths}))^2$ elements, and thus, it is possible to reduce an amount of calculations in the matrix operation section.

A channel simulator of a yet further aspect of the invention adopts a configuration further provided with an analog adjusting section which is comprised of a digital circuit, and simulates fluctuations in a signal of each channel caused by fluctuations in performance of an analog circuit corresponding to each channel among the MxN channels.

According to this configuration, attention was directed toward the fact that the multi-antenna apparatus targeted for simulation has M analog circuits on the transmission side and N analog circuits on the reception side, and that fluctuations between the MxN analog circuits affect signals on channels, and the analog adjusting section simulates the fluctuations between the channels to add to a digital baseband signal as appropriate . It is thereby possible to simulate channel variations in MxN-channel transmission more closely approximating real variations.

A channel simulator of a yet further aspect of the invention adopts a configuration further provided with an input interface that inputs an output signal of a digital baseband processing section of a transmission system of the wireless apparatus, a gain control section that performs gain control such that a signal level becomes almost constant of a multipath signal resulting from addition of the signal of each path provided with the channel variation, and an output interface that outputs the digital baseband signal subjected to the gain control to a digital baseband processing section of the reception system of the wireless apparatus, where the channel processing section adds a channel variation component with an I component and a Q component equal to each other.

According to this configuration, the digital baseband signal is directly input from the input section, the multipath signal provided with the channel variation is subjected to a level correction in the gain control section so as not to loose a bit in AD conversion in the reception system, and further is provided with the channel variation component with the I component and Q component equal to each another, and it is thereby possible to measure characteristics of the time AFC and AGC almost ideally operates on each path even when a radio circuit of the reception system of the development apparatus is not present. As a result, it is possible to evaluate performance of the digital baseband processing section only using a digital baseband signal without the AGC circuit and AFC circuit. It thus becomes possible to evaluate characteristics of the digital baseband processing section without the radio circuit, thereby enabling improved

efficiency in development.

As described above, according to the present invention, a channel variation on each of MxN channels is formed using arrangement information of reception antennas, and channel variations corresponding to the MxN channels are added to respective signals of the MxN channels. Therefore, the channel variations of all the MxN channels can be formed from the information of arrangements of transmission and reception antennas, and it is thereby possible to form channel variations in MxN-channel transmission formed by the multi-antenna apparatus with accuracy and ease.

This application is based on the Japanese Patent Application No.2002-372960 filed on December 24, 2002, entire content of which is expressly incorporated by reference herein.

Industrial Applicability

The present invention is suitable for use in developing, for example, a cellular telephone, base station of the cellular telephone, and MT (Mobile Terminal) and AP (Access Point) of wireless LAN (Local Area Network).

## Claims

**1.** A channel simulation method to simulate transmission on MxN channels formed by M transmission antennas and N reception antennas, comprising:

a channel variation forming step of forming a channel variation on each of the MxN channels using information of arrangements of transmission and reception antennas; and
a channel variation adding step of adding channel variations corresponding to the MxN channels to respective signals of the MxN channels.

**2.** The channel simulation method according to claim 1, wherein in the channel variation forming step, a delay and a phase variation on each of the channels due to the arrangements of antennas are obtained using the information of arrangements of transmission and reception antennas, and channel variations are formed such that the delay and the phase variation vary with the channels .

**3.** The channel simulation method according to claim 2, wherein in the channel variation forming step, in forming a short-term variation on each of the channels as the channel variation, short-term variations corresponding to the MxN channels are formed by obtaining a difference in path distance between each path of a reference channel beforehand set or prepared and pertinent each path of each of the channels using the information of a positional relationship between transmission and reception antennas on each of the channels and information of a radiation direction and a direction of arrival on each path, and for a signal of pertinent each path of each channel, generating a short-term variation such that a phase difference occurs with respect to a short-term variation of each path of the reference channel by the difference in path distance.

**4.** The channel simulation method according to claim 1, wherein in the channel variation forming step, in forming an instantaneous variation on each of the channels as the channel variation, correlated instantaneous variations corresponding to the MxN channels are formed by repeating processing, the number of times corresponding to the MxN channels, for generating respective band-limited gaussian noises corresponding to the reference channel and another channel, subjecting two band-limited gaussian noises to weighted addition with correlated filter characteristics using at least the information of arrangements of antennas as a parameter, and thereby forming a correlated instantaneous variation correlated with an instantaneous variation on the reference channel.

**5.** The channel simulation method according to claim 1, wherein the channel variation forming step includes the steps of:

generating MxNx (the number of paths) instantaneous variations mutually independent between the channels;
obtaining an (MNxMN) correlation matrix from a difference in propagation path distance of each path obtained from input data or experiment data and a positional relationship of antennas, and theoretical spatio correlation values of Rayleigh fading;
obtaining based on the correlation matrix a transformation matrix to calculate mutually correlated signal vectors from signal vectors that are not correlated with one another; and
obtaining MxNx(the number of paths) correlated instantaneous variations correlated between channels, by repeating, the number of times corresponding to the number of paths, matrix operation processing using the

transformation matrix for each instantaneous variation of a pertinent path of each channel.

6. The channel simulation method according to claim 1, wherein the channel variation forming step includes the steps of:

generating MxNx (the number of paths) instantaneous variations mutually independent between channels and between paths;
obtaining an (MNx(the number of paths)xMNx(the number of paths)) correlation matrix from a difference in propagation path distance of each path obtained from input data or experiment data and a positional relationship of antennas, and theoretical temporal-spatio correlation values of Rayleigh fading;
obtaining based on the correlation matrix a transformation matrix to calculate mutually correlated signal vectors from signal vectors that are not correlated with one another; and
obtaining MxNx(the number of paths) correlated instantaneous variations correlated between paths, by performing matrix operation processing using the transformation matrix on the MxNx(the number of paths) instantaneous variation.

7. The channel simulation method according to claim 5 or 6, wherein in the step of obtaining a transformation matrix, the transformation matrix is obtained by eigenvalue transformation.

8. The channel simulation method according to claim 5 or 6, wherein in the step of obtaining a transformation matrix, the transformation matrix is obtained by Cholesky factorization.

9. A channel simulator that that simulates channel characteristics of a wireless apparatus using an MxN-channel transmission system using M transmission antennas and N reception antennas, comprising:

an input section which inputs M signals obtained by a transmission system of the wireless apparatus;
a signal replicating section which makes N copies of each of the M signals, and thereby forms MxN channel signals;
a channel processor that adds a channel variation to each of the MxN channel signals corresponding to arrangements of transmission and reception antennas; and
a combiner that selectively combines M channel signals repeatedly among the MxN channel signals each provided with the channel variation to form N signals.

10. The channel simulator according to claim 9, wherein the channel processor has a path former that forms a signal of each path having a delay corresponding to the arrangements of transmission and reception antennas for a signal of each of the channels, a short-term complex impulse response generator that forms a complex gain of a short-term variation to be added to each path of each of the channels, and a short-term variation adder that adds the short-term variation to the signal of each path of the each of the channels, and the short-term complex impulse response generator obtains a difference in path distance between each path of a reference channel and pertinent each path of each of the channels using information of a positional relationship between transmission and reception antennas on each of the channels and a radiation direction and a direction of arrival on each path, and for the signal of each path of each of the channels generated in the path former, generates a short-term variation such that a phase difference occurs with respect to a short-term variation of each path of the reference channel beforehand set or prepared by the difference in path distance.

11. The channel simulator according to claim 9, wherein the channel processor has a path former that forms a signal of each path having a delay corresponding to the arrangements of transmission and reception antennas for a signal of each of the channels, a correlated gaussian noise generator that generates a correlated instantaneous variation to be added to each path of each of the channels, and a correlated instantaneous variation adder that adds the correlated instantaneous variation to the signal of each path of each of the channels.

12. The channel simulator according to claim 11, wherein the correlated gaussian noise generator forms correlated instantaneous variations corresponding to the MxN channels by repeating processing, the number of times corresponding to the MxN channels, for generating respective band-limited gaussian noises corresponding to the reference channel and another channel, subjecting two band-limited gaussian noises to weighted addition with correlated filter characteristics using at least the information of arrangements of antennas as a parameter, and thereby forming a correlated instantaneous variation correlated with an instantaneous variation on the reference channel.

**13.** The channel simulator according to claim 11, further comprising:

a transformation matrix calculator which obtains a correlation matrix from a difference in propagation path distance of each path obtained from input data or experiment data and a positional relationship of antennas, and theoretical spatio correlation values of Rayleigh fading, and then, based on the correlation matrix, obtains a transformation matrix to calculate mutually correlated signal vectors from signal vectors that are not correlated with one another,
wherein the correlated gaussian noise generator has:
an instantaneous variation generator that generates MxNx(the number of paths) instantaneous variations mutually independent between channels; and
a matrix operator that generates MxNx(the number of paths) correlated instantaneous variations correlated between channels, by repeating matrix operation processing using the transformation matrix on the instantaneous variations the number of times corresponding to the number of paths.

**14.** The channel simulator according to claim 11, further comprising:

a transformation matrix calculator which obtains a correlation matrix from a difference in propagation path distance of each path obtained from input data or experiment data and a positional relationship of antennas, and theoretical temporal-spatio correlation values of Rayleigh fading, and then, based on the correlation matrix, obtains a transformation matrix to calculate mutually correlated signal vectors from signal vectors that are not correlated with one another,
wherein the correlated gaussian noise generator has:
an instantaneous variation generator that generates MxNx(the number of paths) instantaneous variations mutually independent between the channels and between the paths; and
a matrix operator that generates MxNx(the number of paths) correlated instantaneous variations correlated between the paths, by performing matrix operation processing using the transformation matrix on the instantaneous variations.

**15.** The channel simulator according to claim 13 or 14,
wherein the transformation matrix calculator obtains a transformation matrix by eigenvalue transformation.

**16.** The channel simulator according to claim 13 or 14,
wherein the transformation matrix calculator obtains a transformation matrix by Cholesky factorization.

**17.** The channel simulator according to claim 9, further comprising:

an analog adjustor which is comprised of a digital circuit, and simulates fluctuations in a signal of each of the channels caused by fluctuations in performance of an analog circuit corresponding to each of the MxN channels.

**18.** The channel simulator according to claim 9, further comprising:

an input interface that inputs an output signal of a digital baseband processor of a transmission system of the wireless apparatus;
a gain controller that performs gain control such that a signal level becomes almost constant of a multipath signal resulting from addition of the signal of each path provided with the channel variation; and
an output interface that outputs the digital baseband signal subjected to the gain control to a digital baseband processor of the reception system of the wireless apparatus,

wherein the channel processor adds a channel variation component with an I component and a Q component equal to each other.

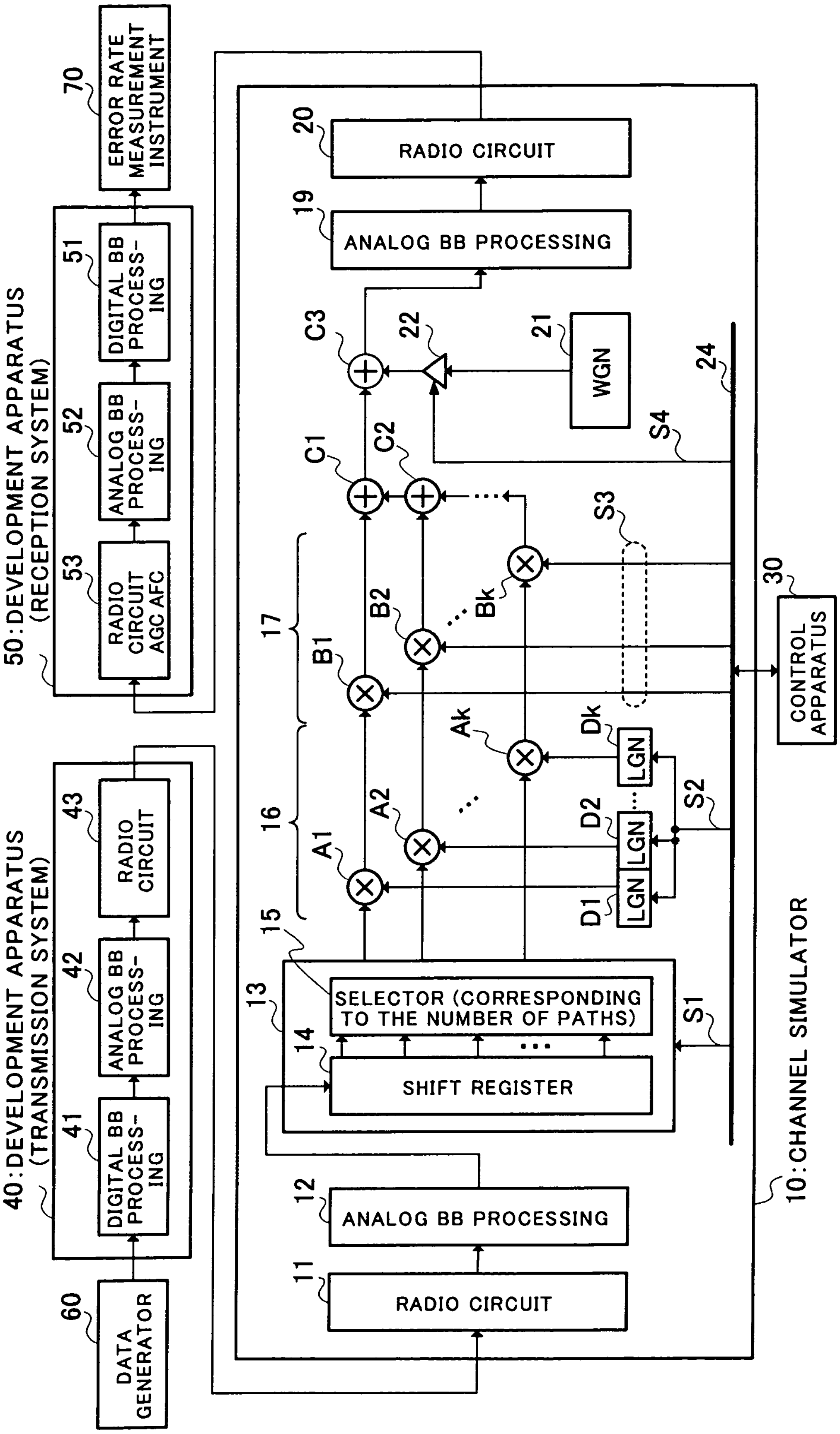


FIG.1 (PRIOR ART)

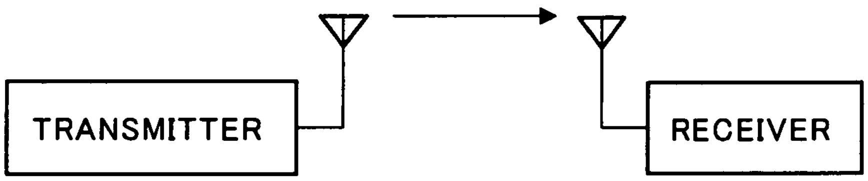


FIG.2

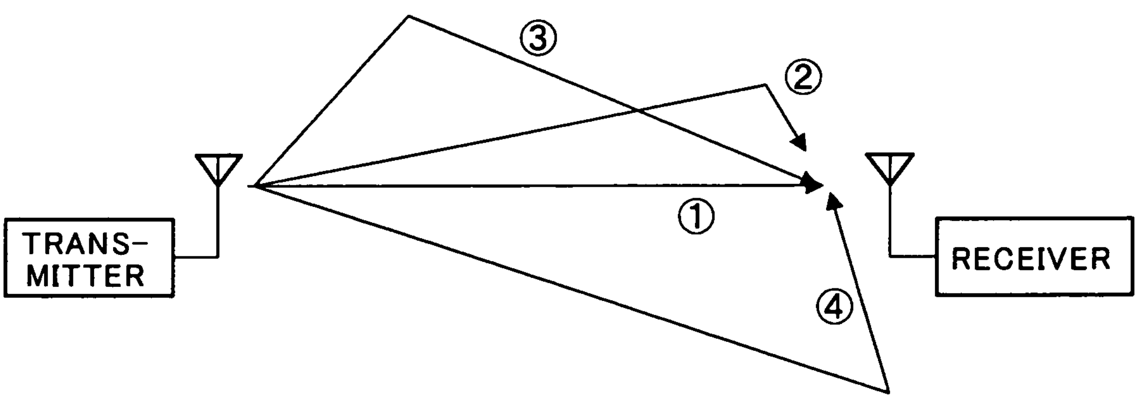


FIG.3

FIG.4(A)

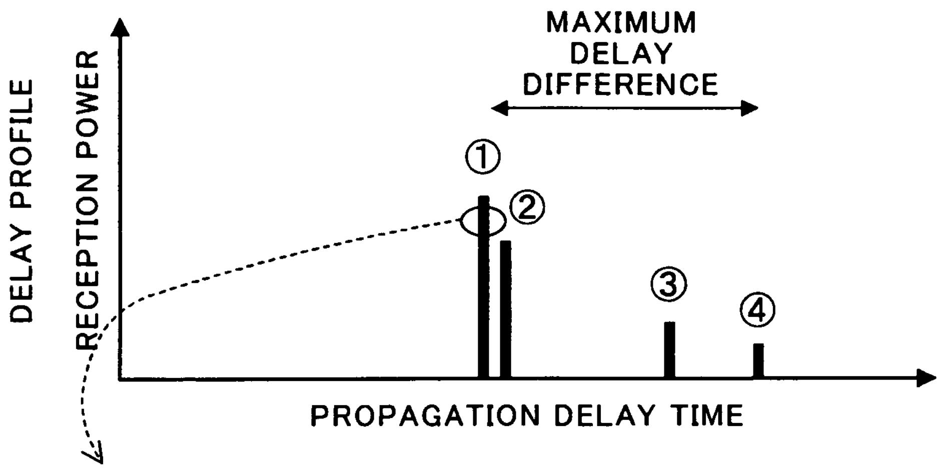


FIG.4(B)

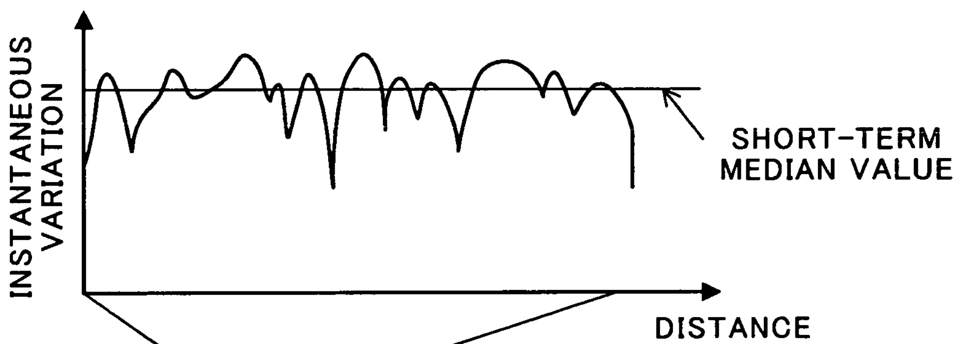


FIG.4(C)

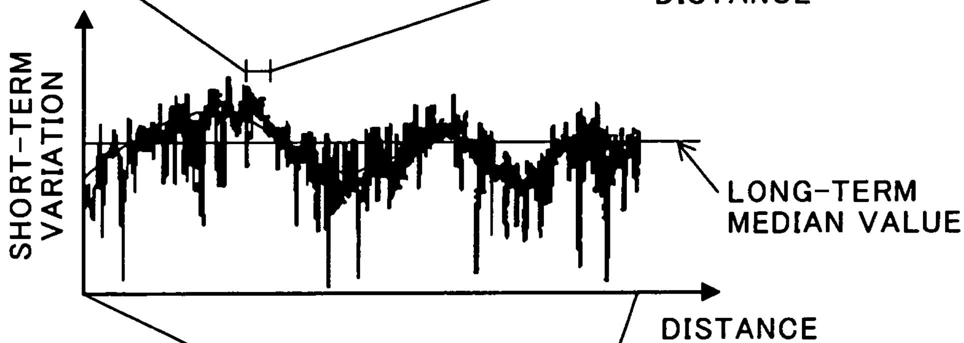


FIG.4(D)

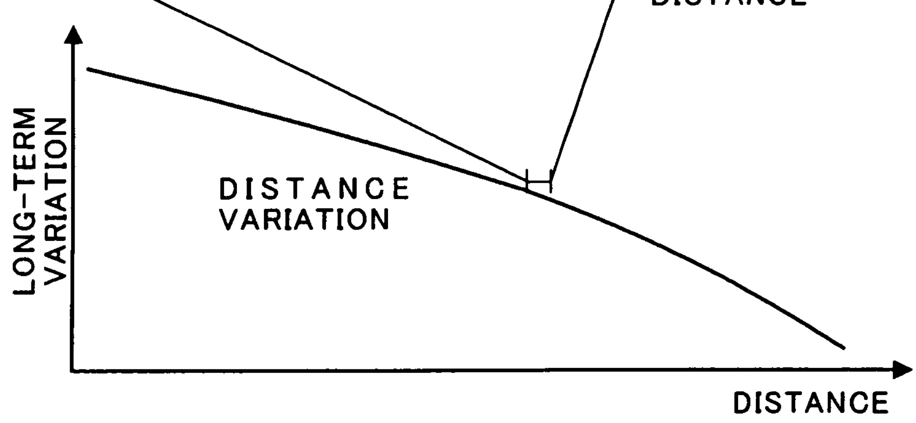

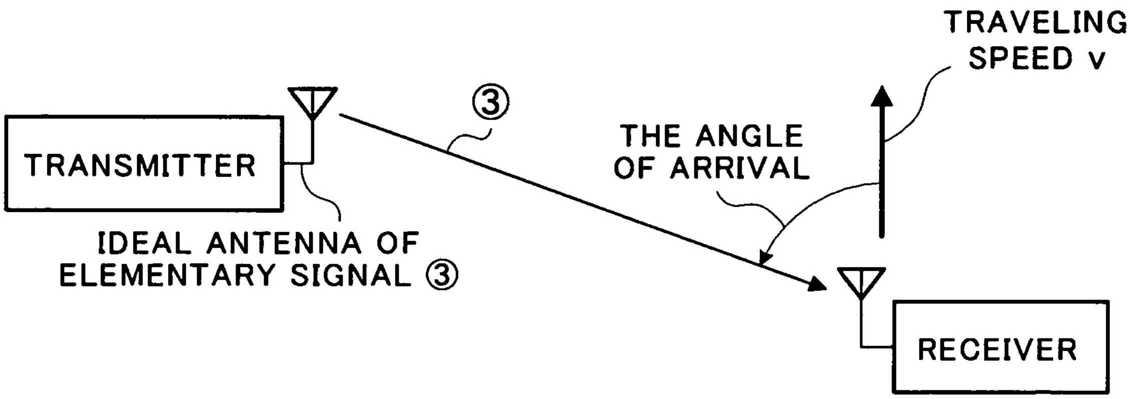
TRAVELING
SPEED v
③
TRANSMITTER
THE ANGLE
OF ARRIVAL
IDEAL ANTENNA OF
ELEMENTARY SIGNAL ③
RECEIVER

FIG.5

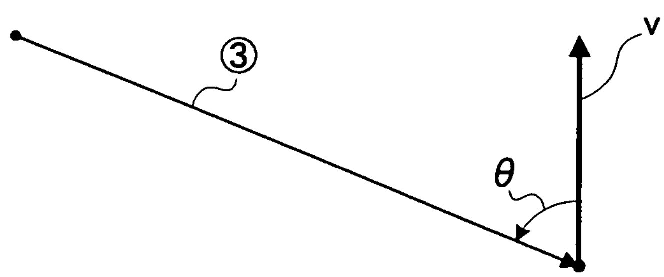
v
③
θ

FIG.6

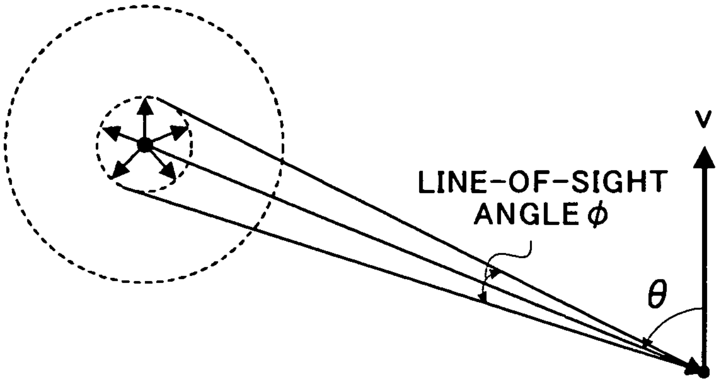
v
LINE-OF-SIGHT
ANGLE φ
θ

FIG.7

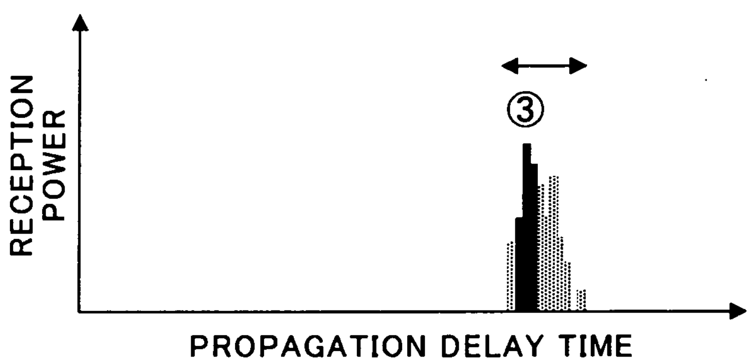
RECEPTION
POWER
③
PROPAGATION DELAY TIME

FIG.8

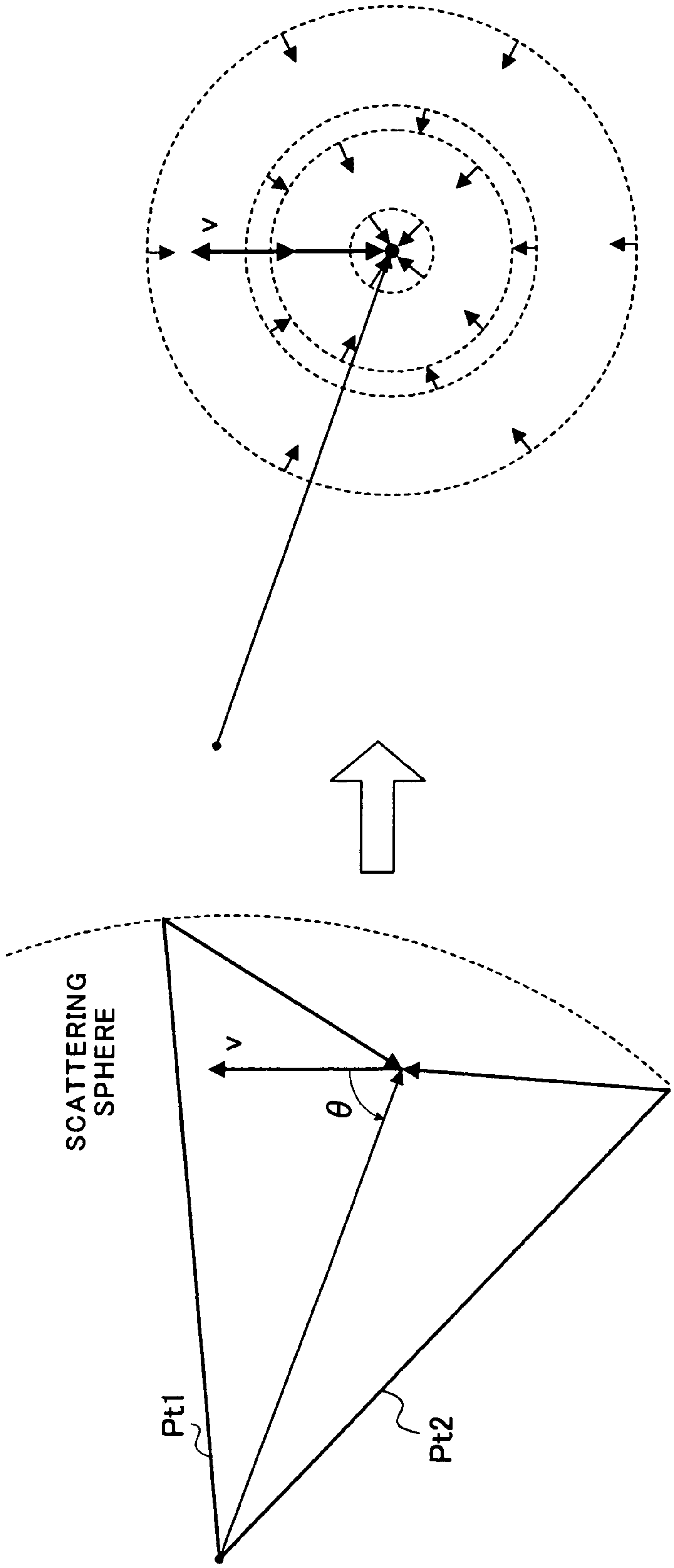


FIG.9(A)

FIG.9(B)

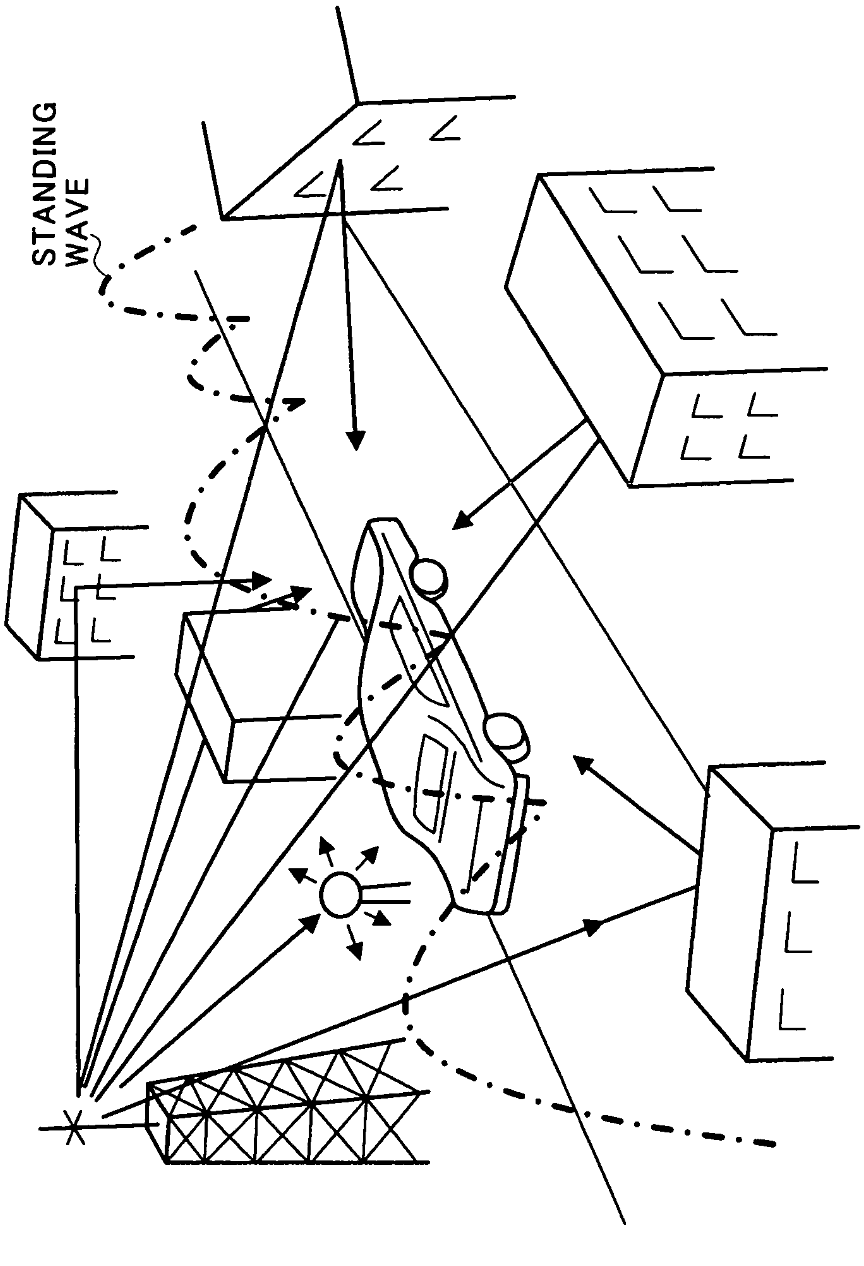


FIG.10

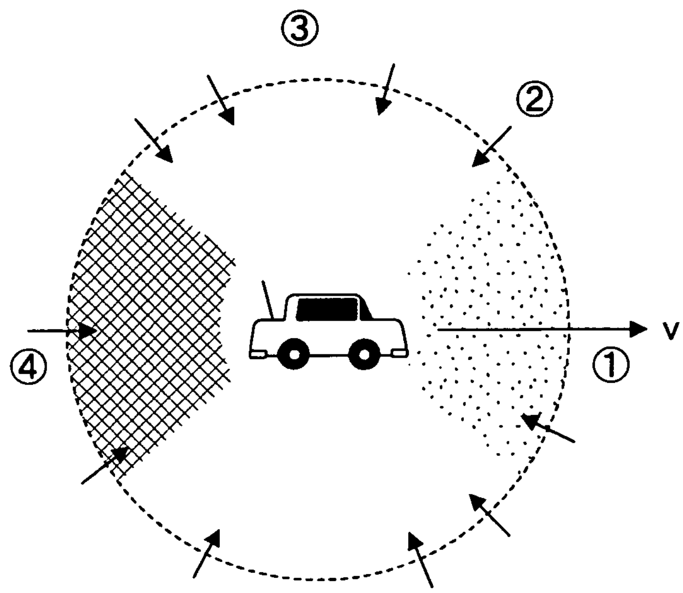


FIG.11

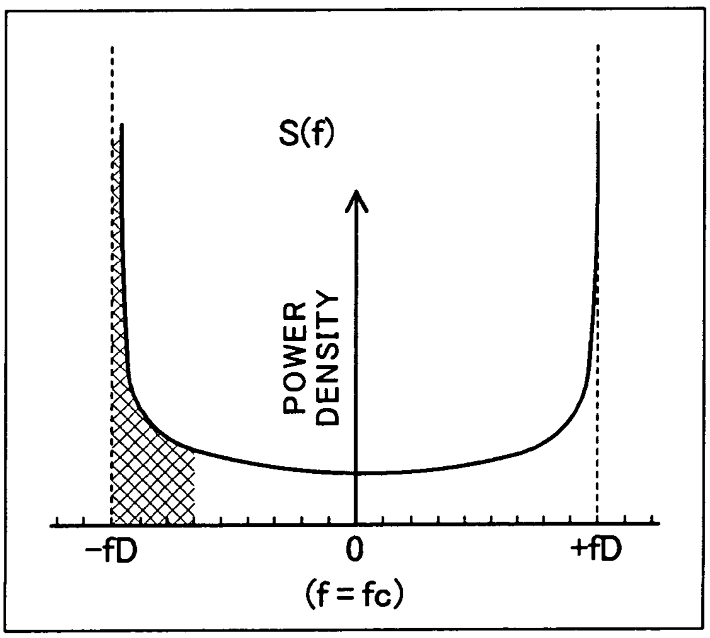


FIG.12

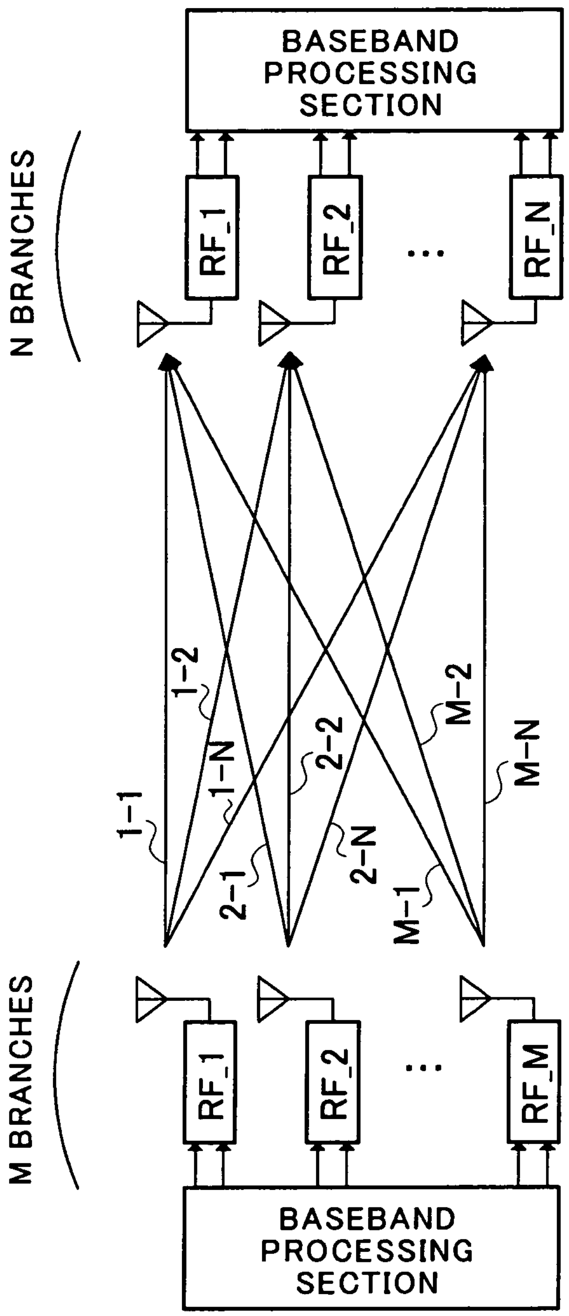
BASEBAND PROCESSING SECTION
N BRANCHES
RF_1
RF_2
RF_N
1-1
1-2
1-N
2-1
2-2
2-N
M-1
M-2
M-N
M BRANCHES
RF_1
RF_2
RF_M
BASEBAND PROCESSING SECTION

FIG.13

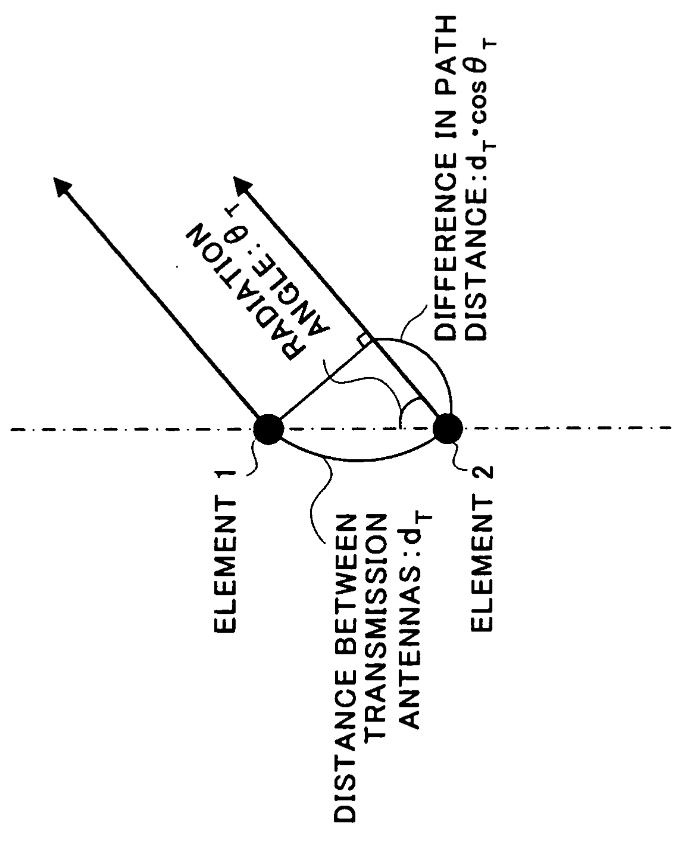


FIG.14(A)

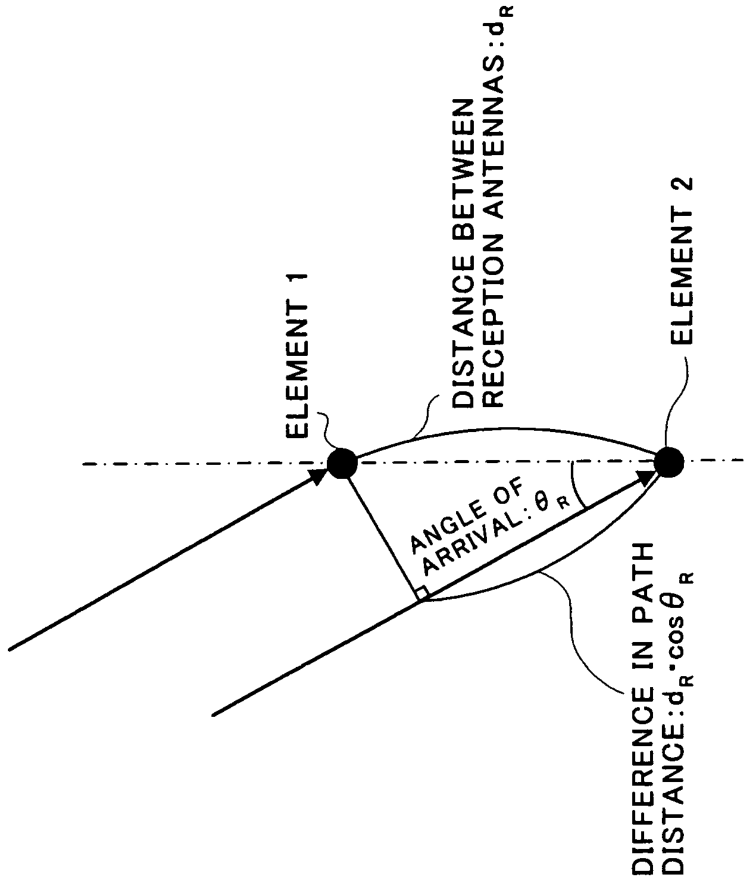


FIG.14(B)

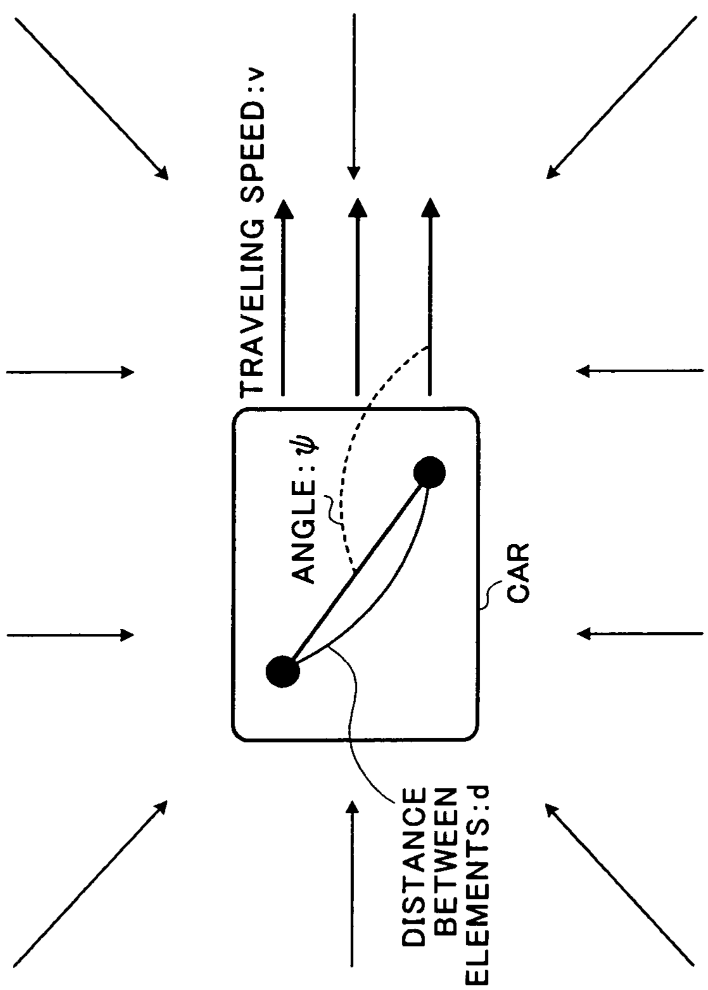


FIG.15

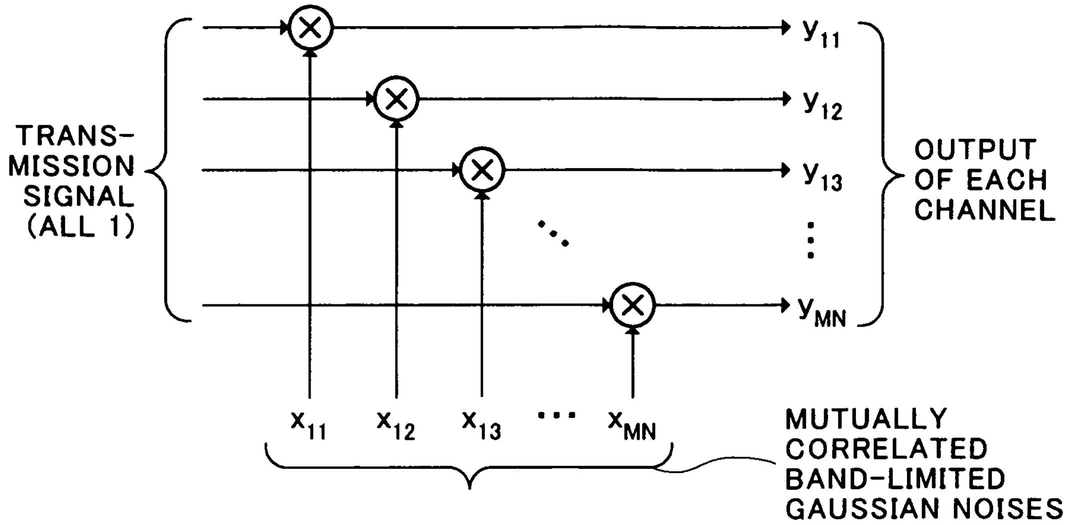
TRANS-
MISSION
SIGNAL
(ALL 1)
y11
y12
y13
yMN
OUTPUT
OF EACH
CHANNEL
x11
x12
x13
xMN
MUTUALLY
CORRELATED
BAND-LIMITED
GAUSSIAN NOISES

FIG.16

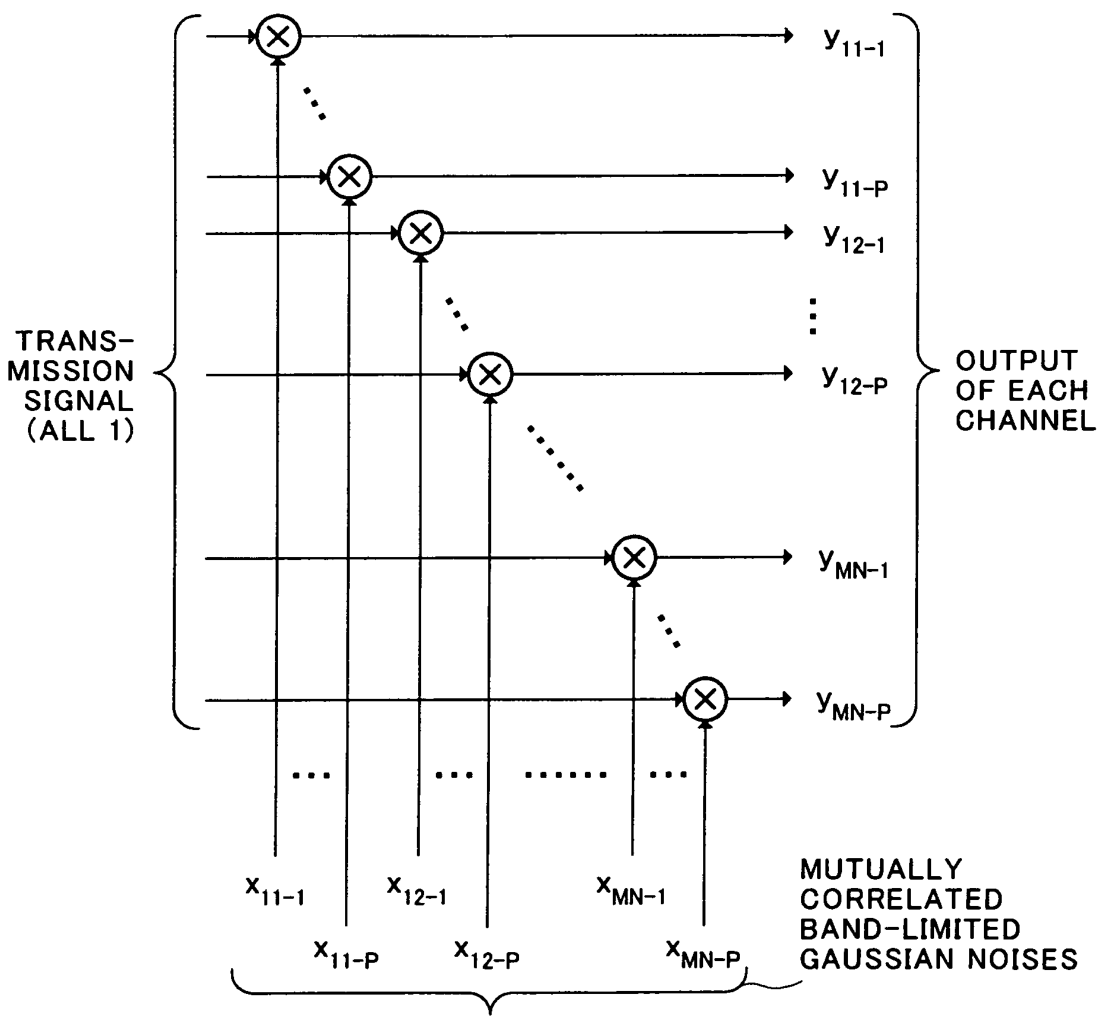
TRANS-
MISSION
SIGNAL
(ALL 1)
y11-1
y11-P
y12-1
y12-P
yMN-1
yMN-P
OUTPUT
OF EACH
CHANNEL
x11-1
x11-P
x12-1
x12-P
xMN-1
xMN-P
MUTUALLY
CORRELATED
BAND-LIMITED
GAUSSIAN NOISES

FIG.17

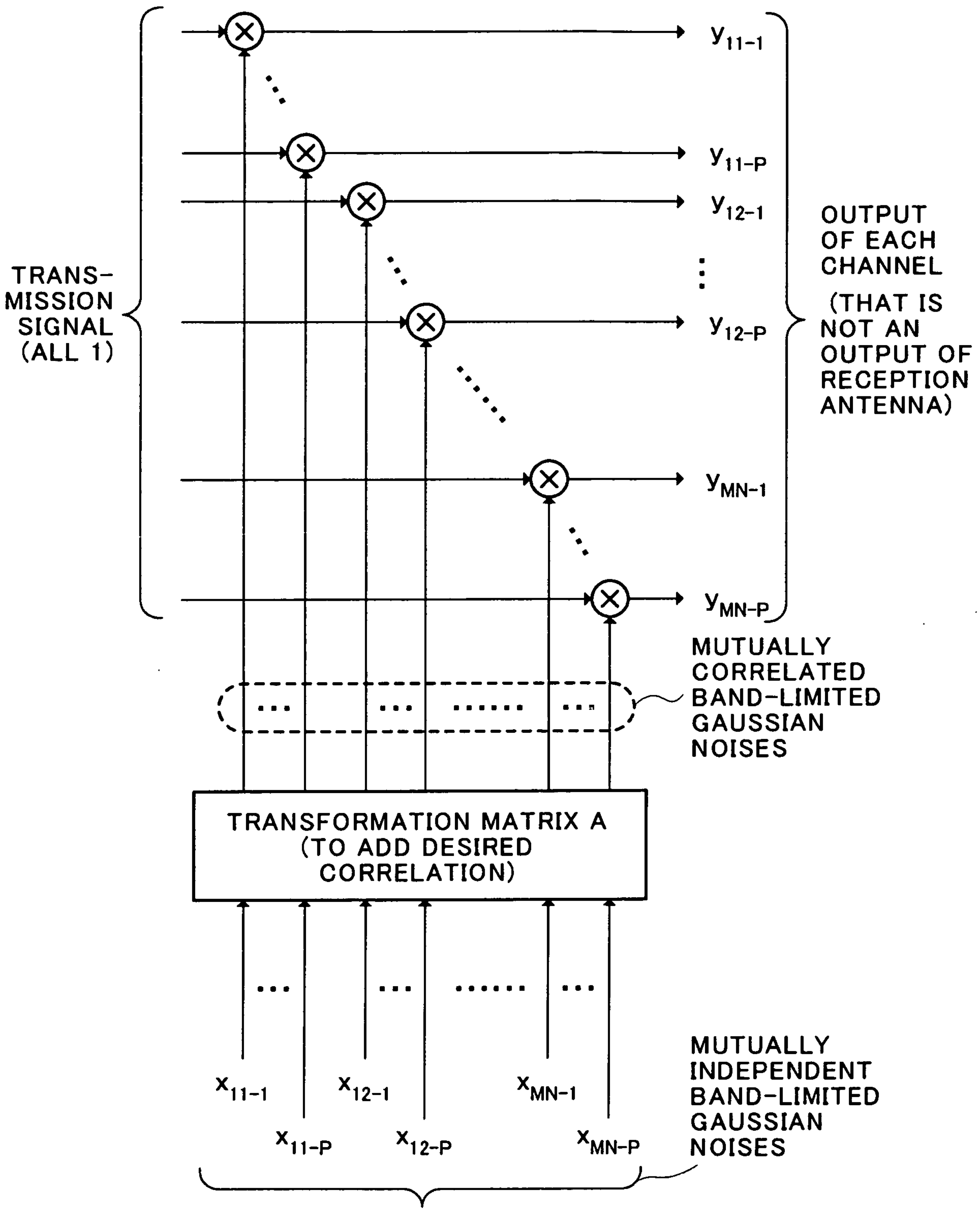

TRANS-MISSION SIGNAL (ALL 1)
y11-1
y11-P
y12-1
y12-P
yMN-1
yMN-P
OUTPUT OF EACH CHANNEL
(THAT IS NOT AN OUTPUT OF RECEPTION ANTENNA)
MUTUALLY CORRELATED BAND-LIMITED GAUSSIAN NOISES
TRANSFORMATION MATRIX A
(TO ADD DESIRED CORRELATION)
x11-1
x11-P
x12-1
x12-P
xMN-1
xMN-P
MUTUALLY INDEPENDENT BAND-LIMITED GAUSSIAN NOISES


FIG.18

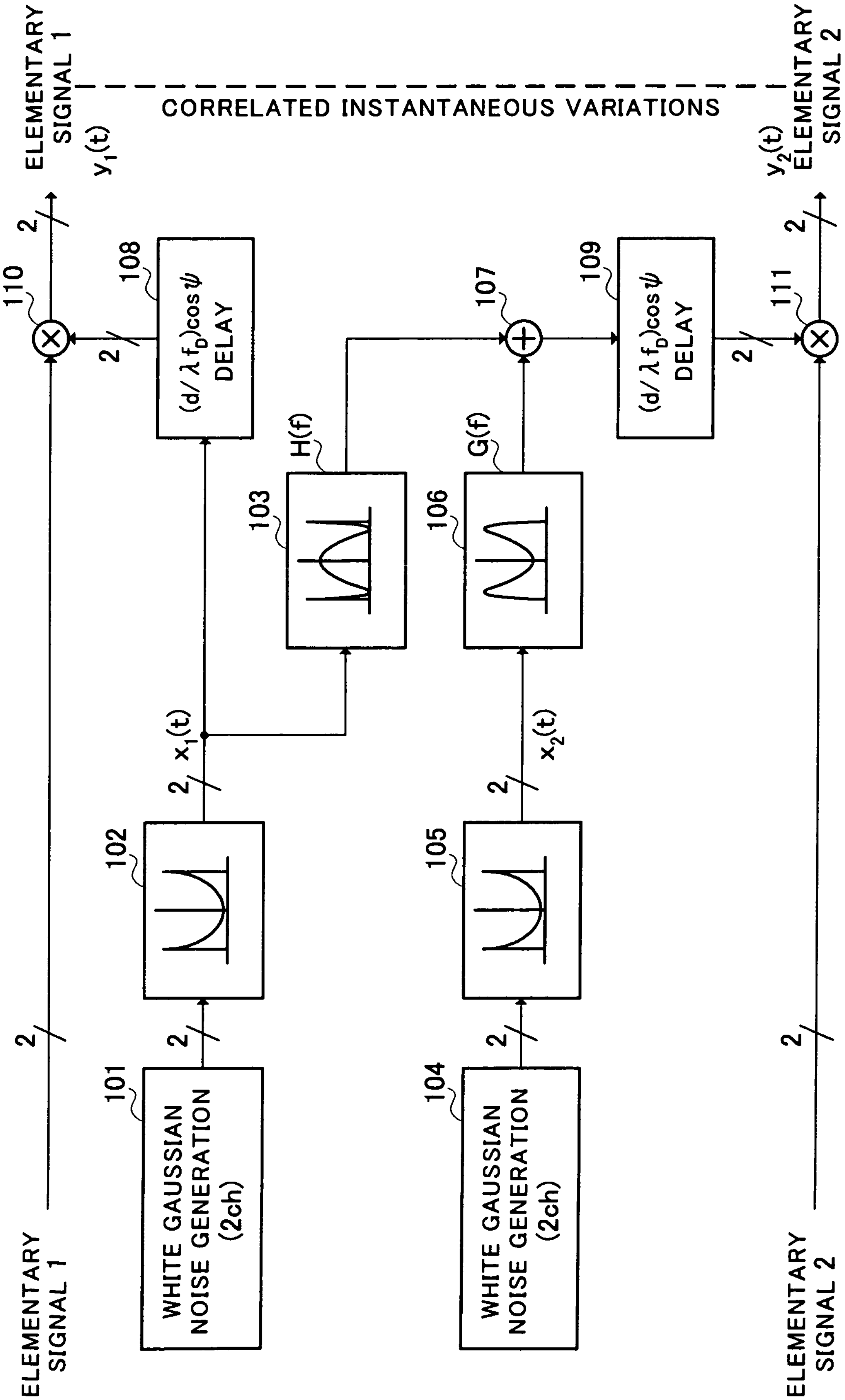
ELEMENTARY SIGNAL 1
ELEMENTARY SIGNAL 2
WHITE GAUSSIAN NOISE GENERATION (2ch)
WHITE GAUSSIAN NOISE GENERATION (2ch)
101
102
103
104
105
106
107
108
109
110
111
2
$x_1(t)$
$x_2(t)$
H(f)
G(f)
$(d/\lambda f_D)\cos\psi$ DELAY
$(d/\lambda f_D)\cos\psi$ DELAY
$y_1(t)$ ELEMENTARY SIGNAL 1
$y_2(t)$ ELEMENTARY SIGNAL 2
CORRELATED INSTANTANEOUS VARIATIONS

FIG.19

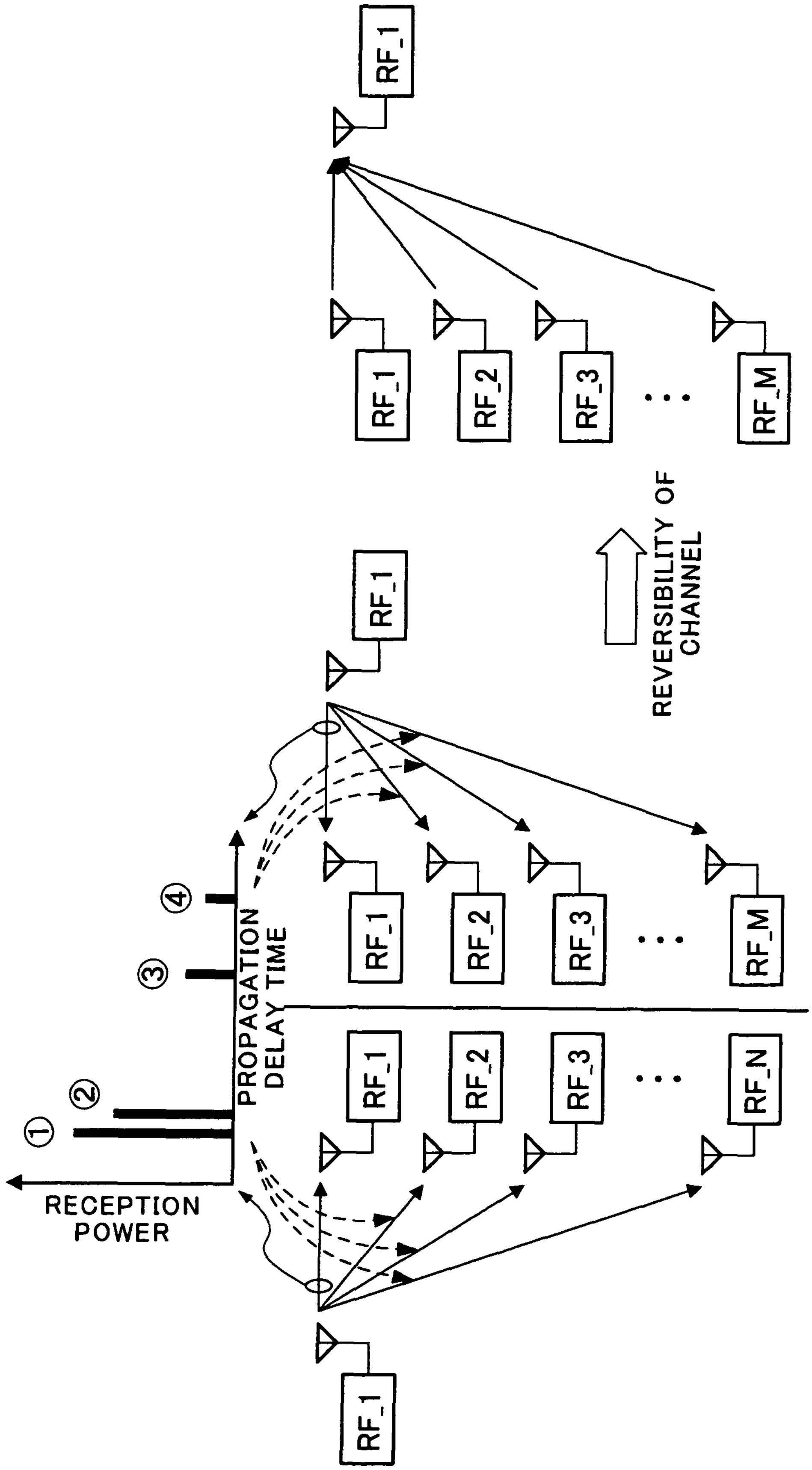


FIG.20(A)

FIG.20(B)

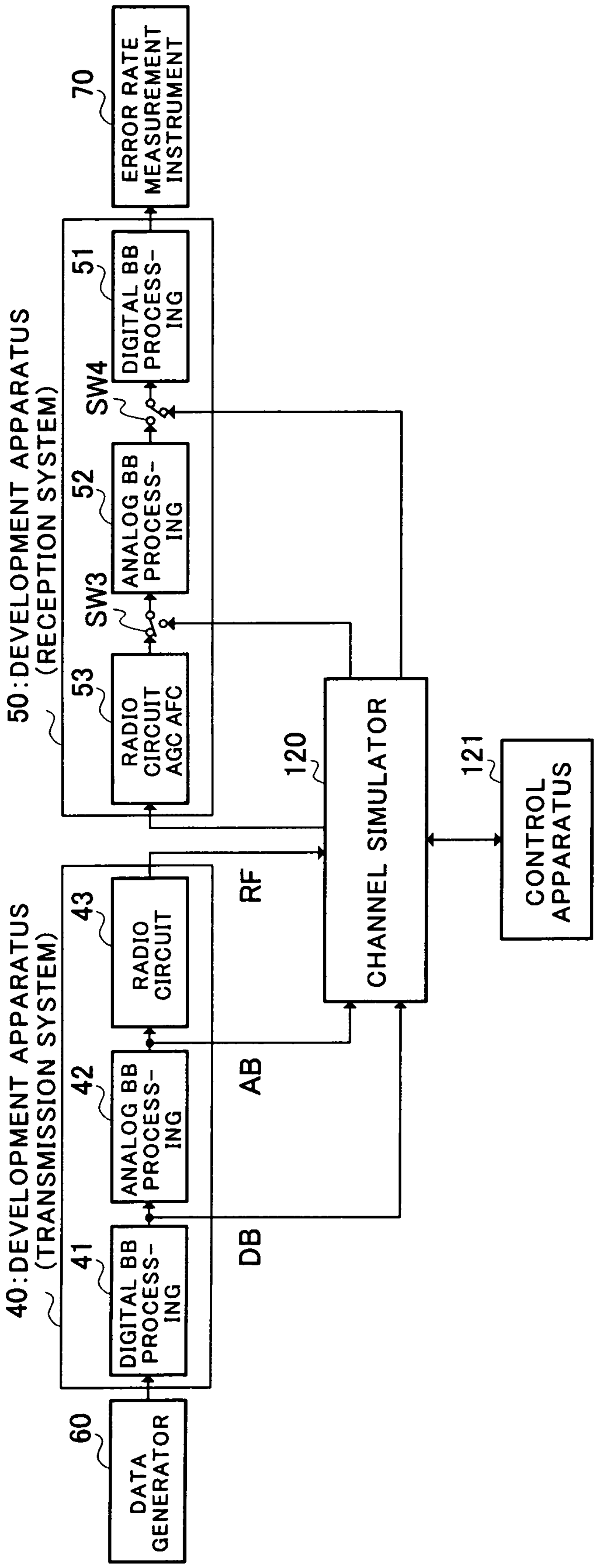

70
ERROR RATE MEASUREMENT INSTRUMENT
50: DEVELOPMENT APPARATUS (RECEPTION SYSTEM)
51
DIGITAL BB PROCESS-ING
SW4
52
ANALOG BB PROCESS-ING
SW3
53
RADIO CIRCUIT AGC AFC
120
CHANNEL SIMULATOR
121
CONTROL APPARATUS
40: DEVELOPMENT APPARATUS (TRANSMISSION SYSTEM)
43
RADIO CIRCUIT
42
ANALOG BB PROCESS-ING
41
DIGITAL BB PROCESS-ING
RF
AB
DB
60
DATA GENERATOR


FIG.21

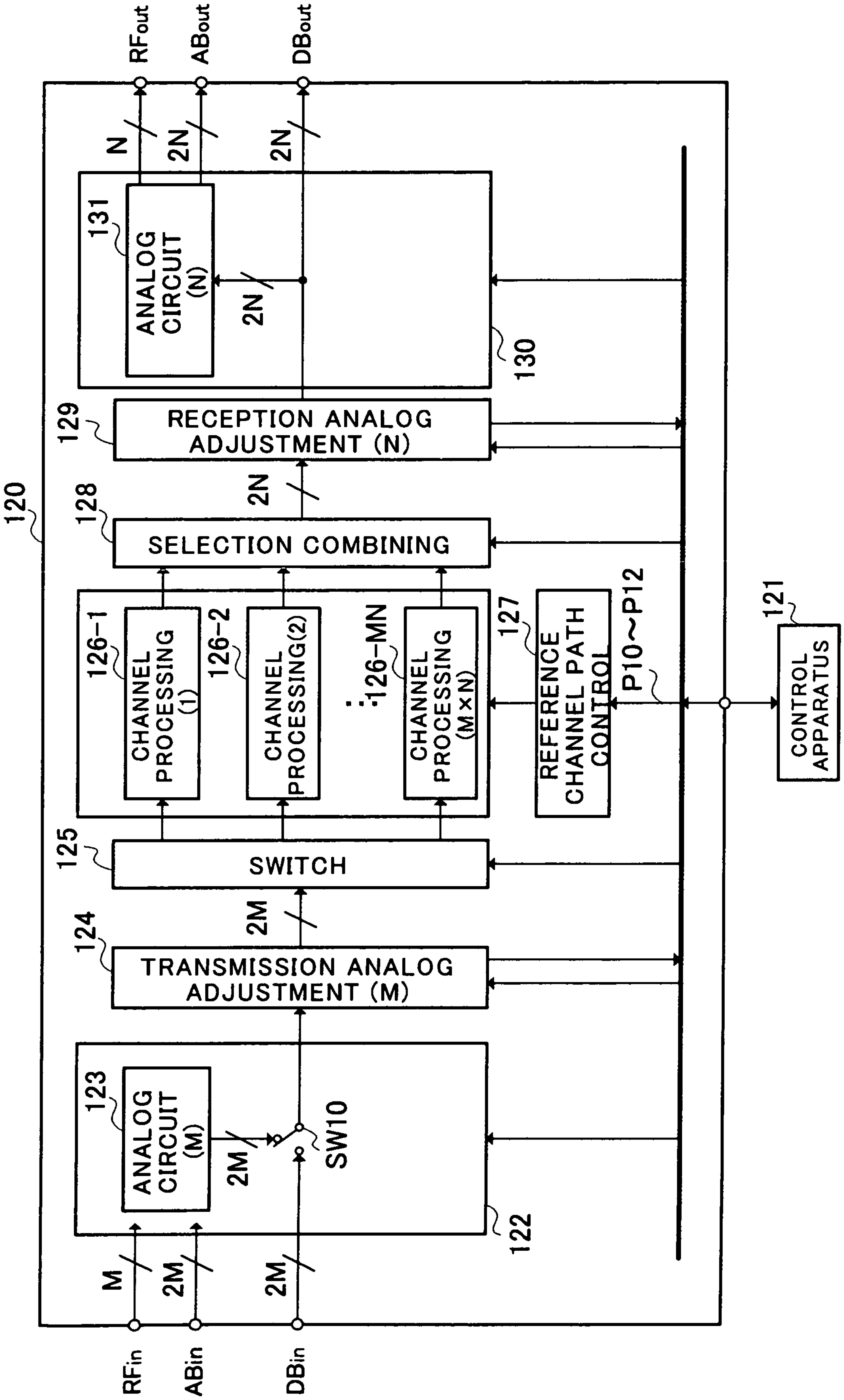

RFout
ABout
DBout
N
2N
2N
131
ANALOG CIRCUIT (N)
2N
130
129
RECEPTION ANALOG ADJUSTMENT (N)
2N
128
SELECTION COMBINING
120
126-1
CHANNEL PROCESSING (1)
126-2
CHANNEL PROCESSING(2)
126-MN
CHANNEL PROCESSING (M×N)
127
REFERENCE CHANNEL PATH CONTROL
P10~P12
121
CONTROL APPARATUS
125
SWITCH
2M
124
TRANSMISSION ANALOG ADJUSTMENT (M)
123
ANALOG CIRCUIT (M)
2M
SW10
122
M
2M
2M
RFin
ABin
DBin


FIG.22

| | |
|---|---|
| P10 | MODEL TYPE<br>TRAVELING SPEED・DIRECTION<br>ARRANGEMENTS・DIRECTIONALITIES OF TRANSMISSION AND RECEPTION ANTENNAS<br>PHASE VARIATION ON/OFF |
| P11 | THE NUMBER OF PATHS<br>DELAY・COMPLEX GAIN OF EACH PATH |
| P12 | RAY-TRACE/ACTUAL RUNNING EXPERIMENT DATA |
| P13 | INSTANTANEOUS VARIATION INITIAL VALUE OF EACH PATH OF THE REFERENCE CHANNEL |
| P14 | CARRIER FREQUENCY<br>TRAVELING SPEED・DIRECTION<br>ARRANGEMENTS・DIRECTIONALITIES OF TRANSMISSION AND RECEPTION ANTENNAS<br>PHASE VARIATION ON/OFF |
| P15 | THE NUMBER OF PATH DIVISIONS (WHEN COMPRESSED)<br>THE NUMBER OF PATHS OF THE REFERENCE CHANNEL<br>DELAY・SHORT-TERM VARIATION COMPLEX GAIN ・ANGLE OF ARRIVAL・LINE-OF-SIGHT ANGLE ON EACH PATH OF THE REFERENCE CHANNEL |
| P16 | THE NUMBER OF PATHS<br>DELAY OF EACH PATH<br>COMPLEX GAIN OF INSTANTANEOUS VARIATION OF EACH PATH |
| P17 | THE NUMBER OF PATHS<br>DELAY OF EACH PATH<br>COMPLEX GAIN OF INSTANTANEOUS VARIATION OF EACH PATH |
| P18 | THE NUMBER OF PATHS<br>COMPLEX GAIN OF SHORT-TERM VARIATION OF EACH PATH |
| P19 | THE NUMBER OF PATHS<br>COMPLEX GAIN OF SHORT-TERM VARIATION OF EACH PATH |
| P20 | THE NUMBER OF PATHS<br>DELAY・ANGLE OF ARRIVAL・LINE-OF-SIGHT ANGLE ON EACH PATH |
| P30 | ON EACH CHANNEL<br>INSTANTANEOUS VARIATION INITIAL VALUE OF EACH PATH<br>UNIT EIGENVECTOR OF EACH PATH |

FIG.23

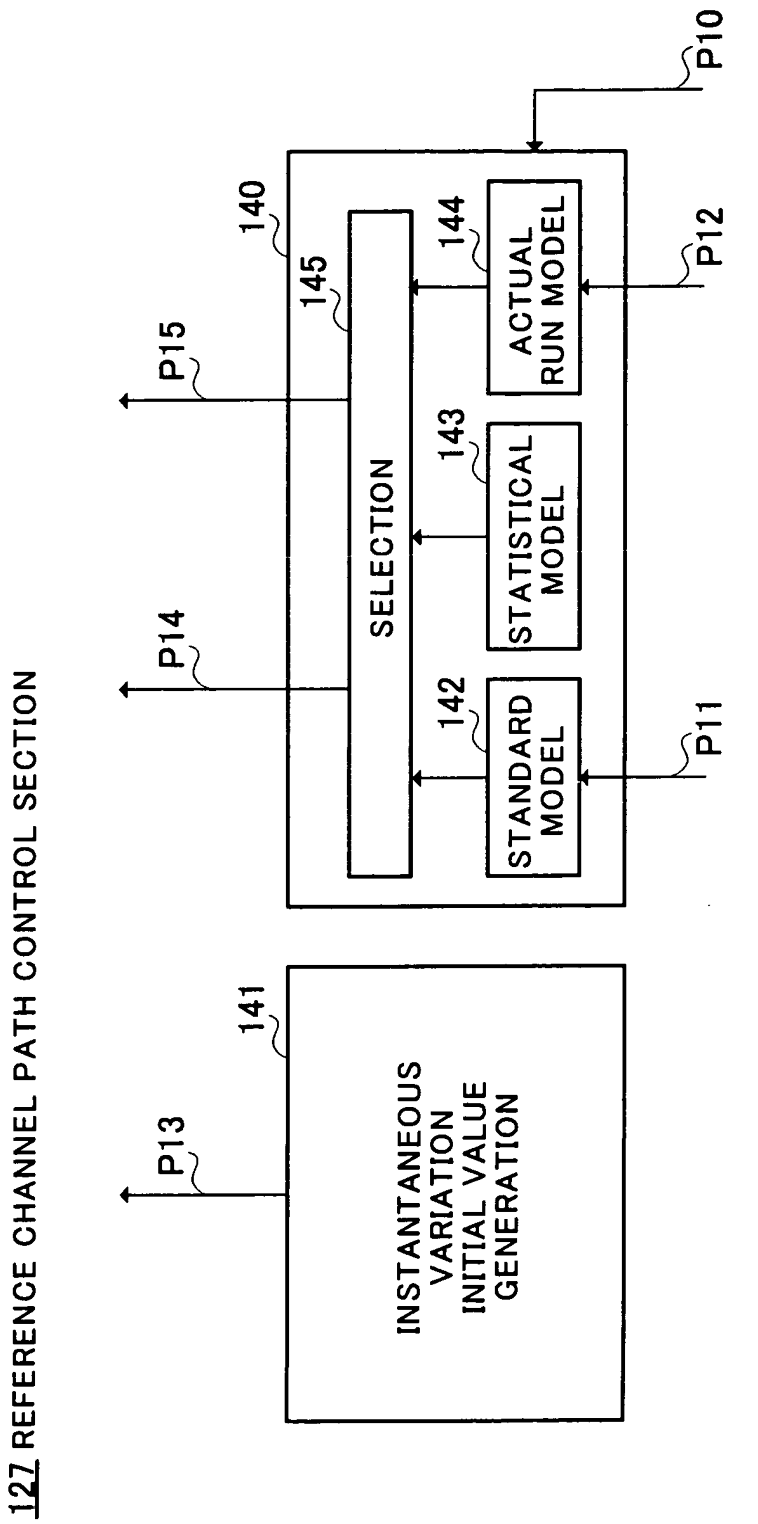
127 REFERENCE CHANNEL PATH CONTROL SECTION
P10
P11
P12
P13
P14
P15
140
141
142
143
144
145
SELECTION
STANDARD MODEL
STATISTICAL MODEL
ACTUAL RUN MODEL
INSTANTANEOUS VARIATION INITIAL VALUE GENERATION

FIG.24

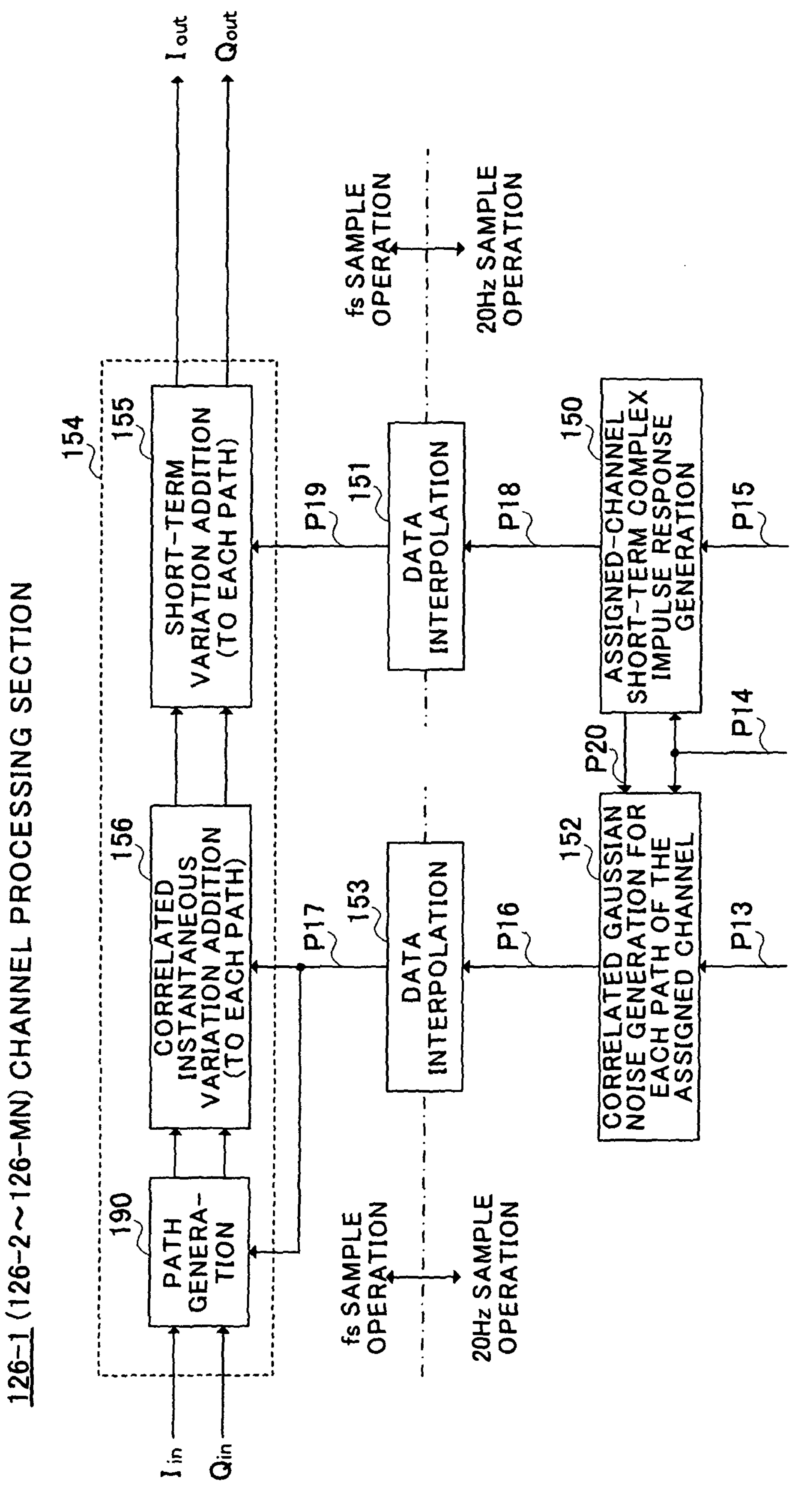
126-1 (126-2~126-MN) CHANNEL PROCESSING SECTION
I in
Q in
I out
Q out
154
190
PATH GENERA-TION
156
CORRELATED INSTANTANEOUS VARIATION ADDITION (TO EACH PATH)
155
SHORT-TERM VARIATION ADDITION (TO EACH PATH)
P17
153
DATA INTERPOLATION
P19
151
DATA INTERPOLATION
fs SAMPLE OPERATION
20Hz SAMPLE OPERATION
P16
152
CORRELATED GAUSSIAN NOISE GENERATION FOR EACH PATH OF THE ASSIGNED CHANNEL
P18
150
ASSIGNED-CHANNEL SHORT-TERM COMPLEX IMPULSE RESPONSE GENERATION
P20
P13
P14
P15

FIG.25

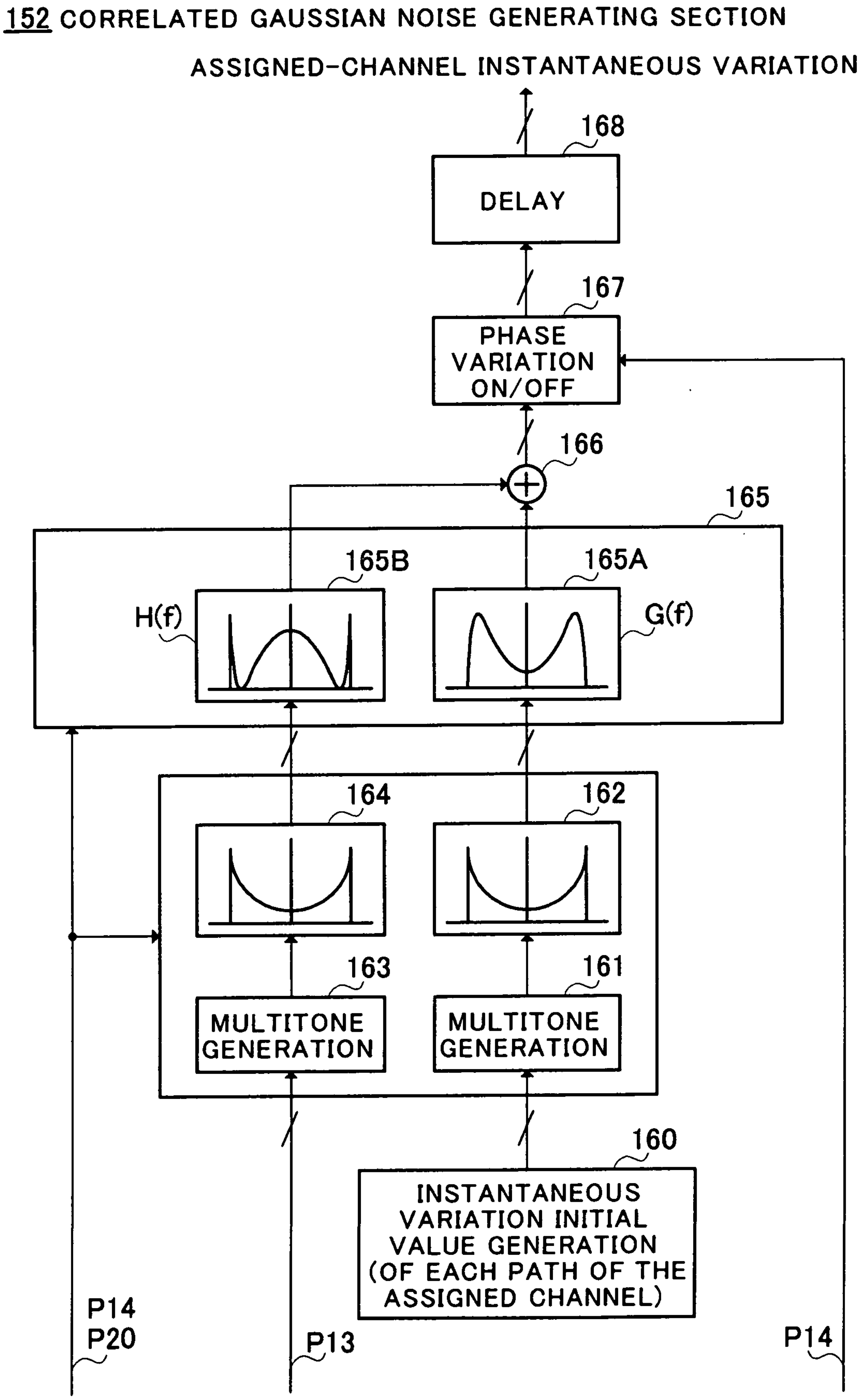
152 CORRELATED GAUSSIAN NOISE GENERATING SECTION
ASSIGNED-CHANNEL INSTANTANEOUS VARIATION
168
DELAY
167
PHASE VARIATION ON/OFF
166
165
165B
165A
H(f)
G(f)
164
162
163
161
MULTITONE GENERATION
MULTITONE GENERATION
160
INSTANTANEOUS VARIATION INITIAL VALUE GENERATION (OF EACH PATH OF THE ASSIGNED CHANNEL)
P14
P20
P13
P14

FIG.26

170 REFERENCE CHANNEL PATH CONTROL SECTION

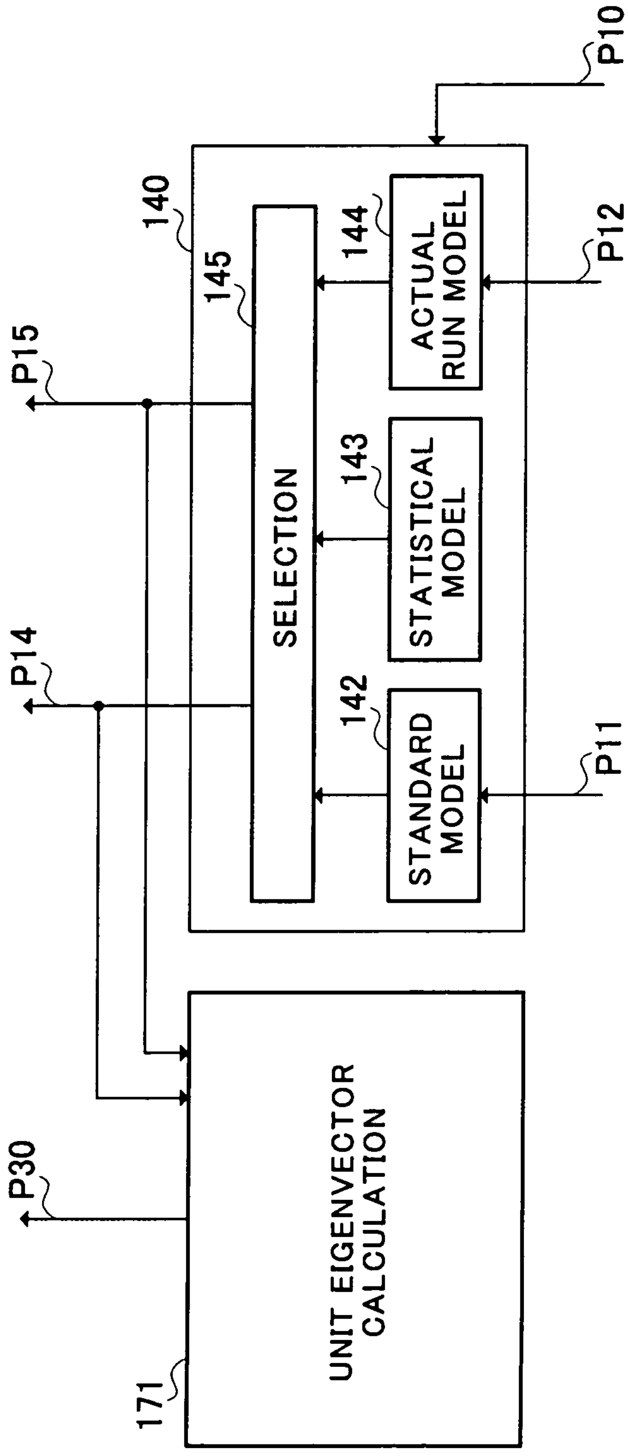


FIG.27

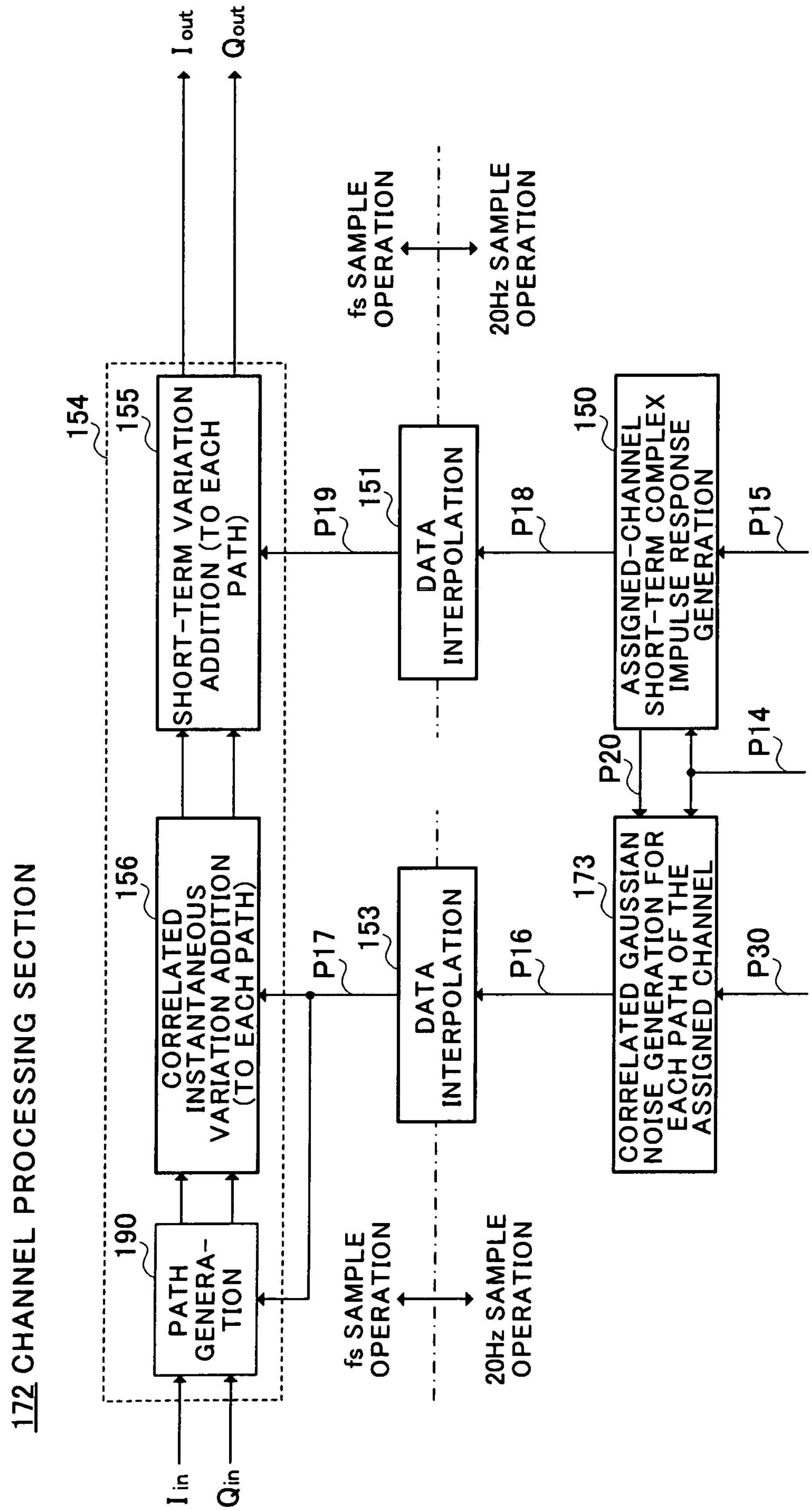
172 CHANNEL PROCESSING SECTION
$I_{in}$
$Q_{in}$
154
190
PATH GENERA-TION
156
CORRELATED INSTANTANEOUS VARIATION ADDITION (TO EACH PATH)
155
SHORT-TERM VARIATION ADDITION (TO EACH PATH)
$I_{out}$
$Q_{out}$
P17
153
DATA INTERPOLATION
P19
151
DATA INTERPOLATION
fs SAMPLE OPERATION
20Hz SAMPLE OPERATION
fs SAMPLE OPERATION
20Hz SAMPLE OPERATION
P16
173
CORRELATED GAUSSIAN NOISE GENERATION FOR EACH PATH OF THE ASSIGNED CHANNEL
P18
150
ASSIGNED-CHANNEL SHORT-TERM COMPLEX IMPULSE RESPONSE GENERATION
P20
P14
P30
P15

FIG.28

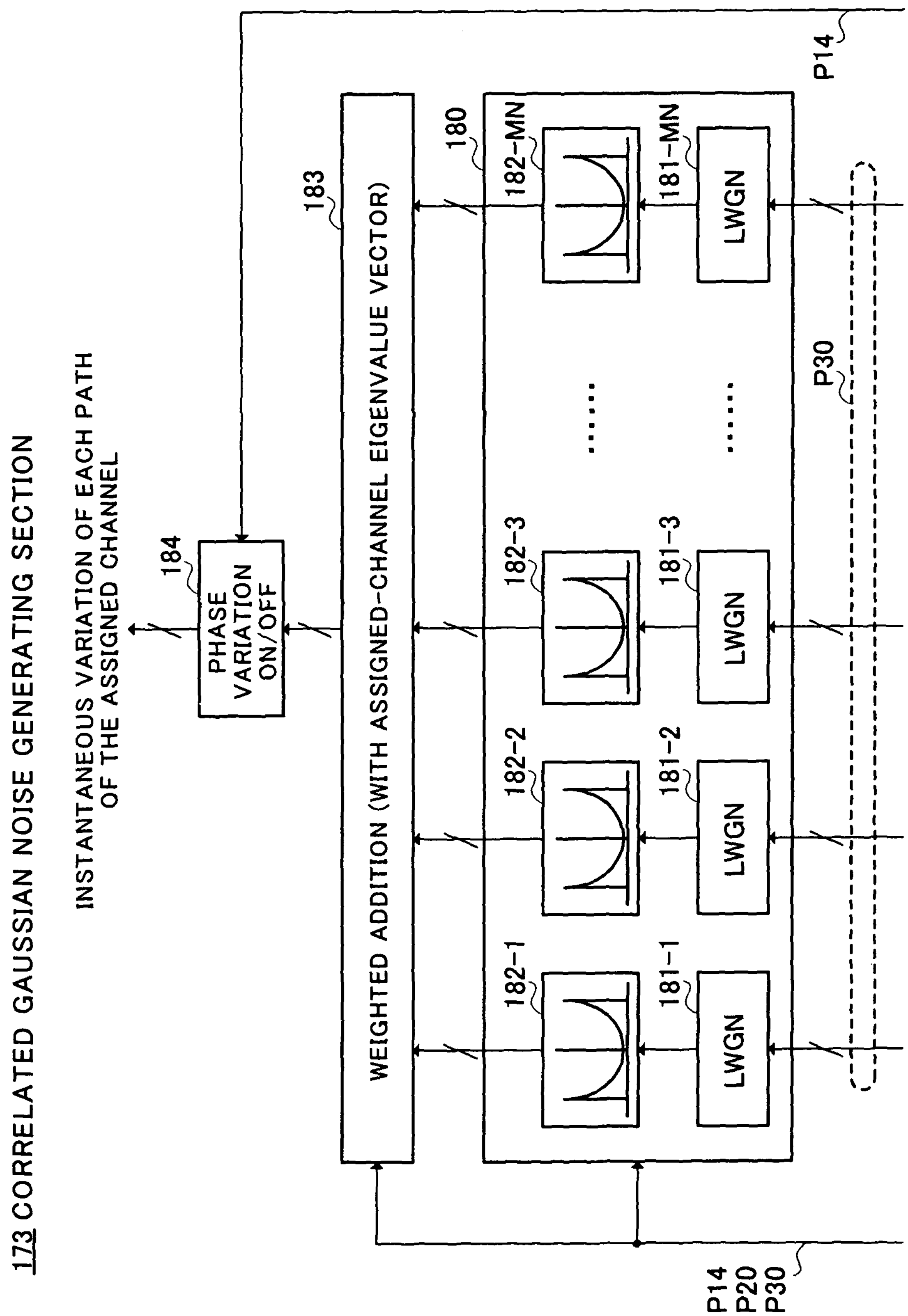
173 CORRELATED GAUSSIAN NOISE GENERATING SECTION
INSTANTANEOUS VARIATION OF EACH PATH OF THE ASSIGNED CHANNEL
184
PHASE VARIATION ON/OFF
183
WEIGHTED ADDITION (WITH ASSIGNED-CHANNEL EIGENVALUE VECTOR)
180
182-1
182-2
182-3
182-MN
181-1
181-2
181-3
181-MN
LWGN
LWGN
LWGN
LWGN
P14
P30
P14
P20
P30

FIG.29

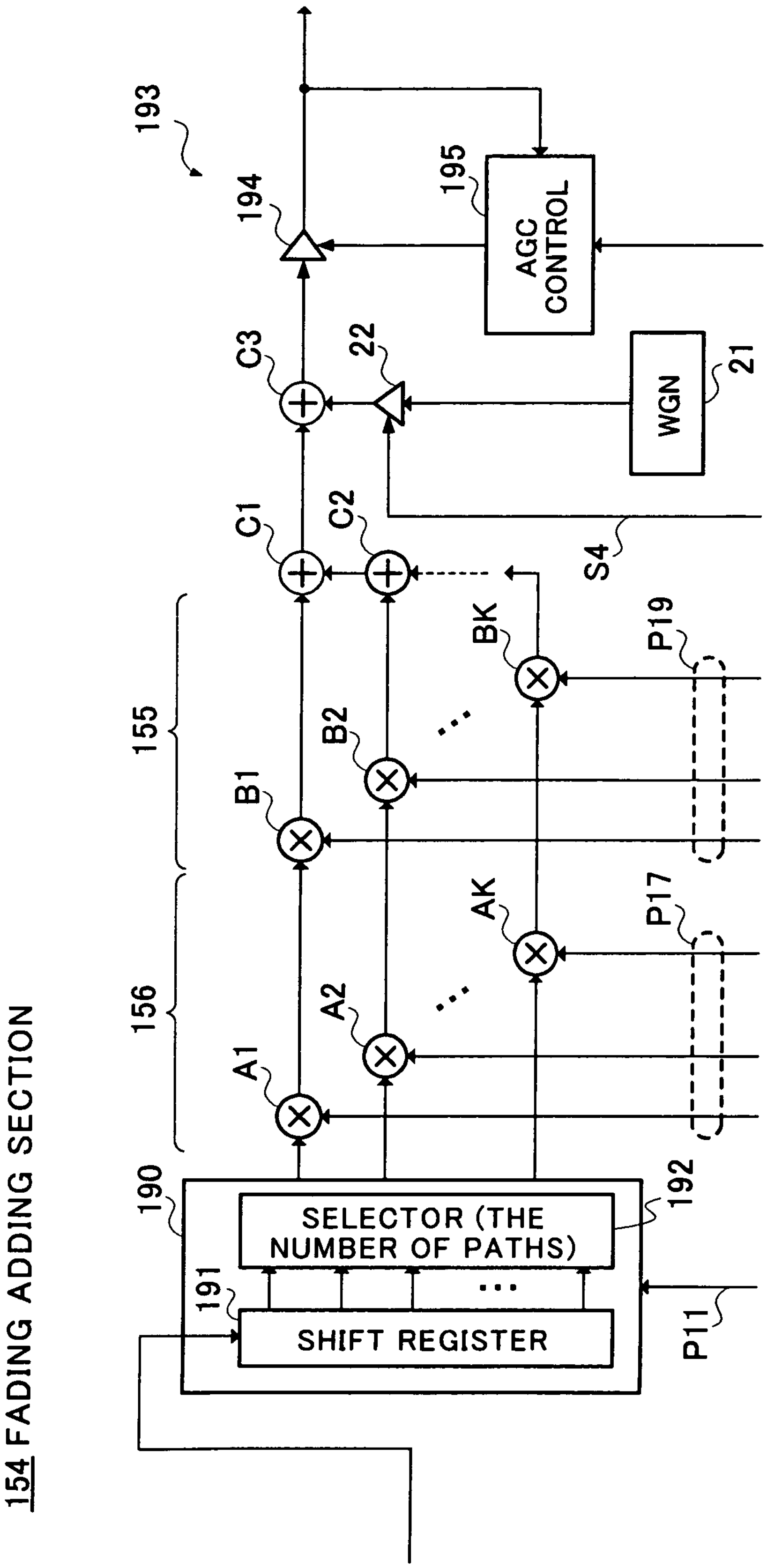
154 FADING ADDING SECTION
193
194
195
AGC CONTROL
C3
22
WGN
21
C1
C2
S4
155
156
B1
B2
BK
P19
A1
A2
AK
P17
190
192
191
SELECTOR (THE NUMBER OF PATHS)
SHIFT REGISTER
P11

FIG.30

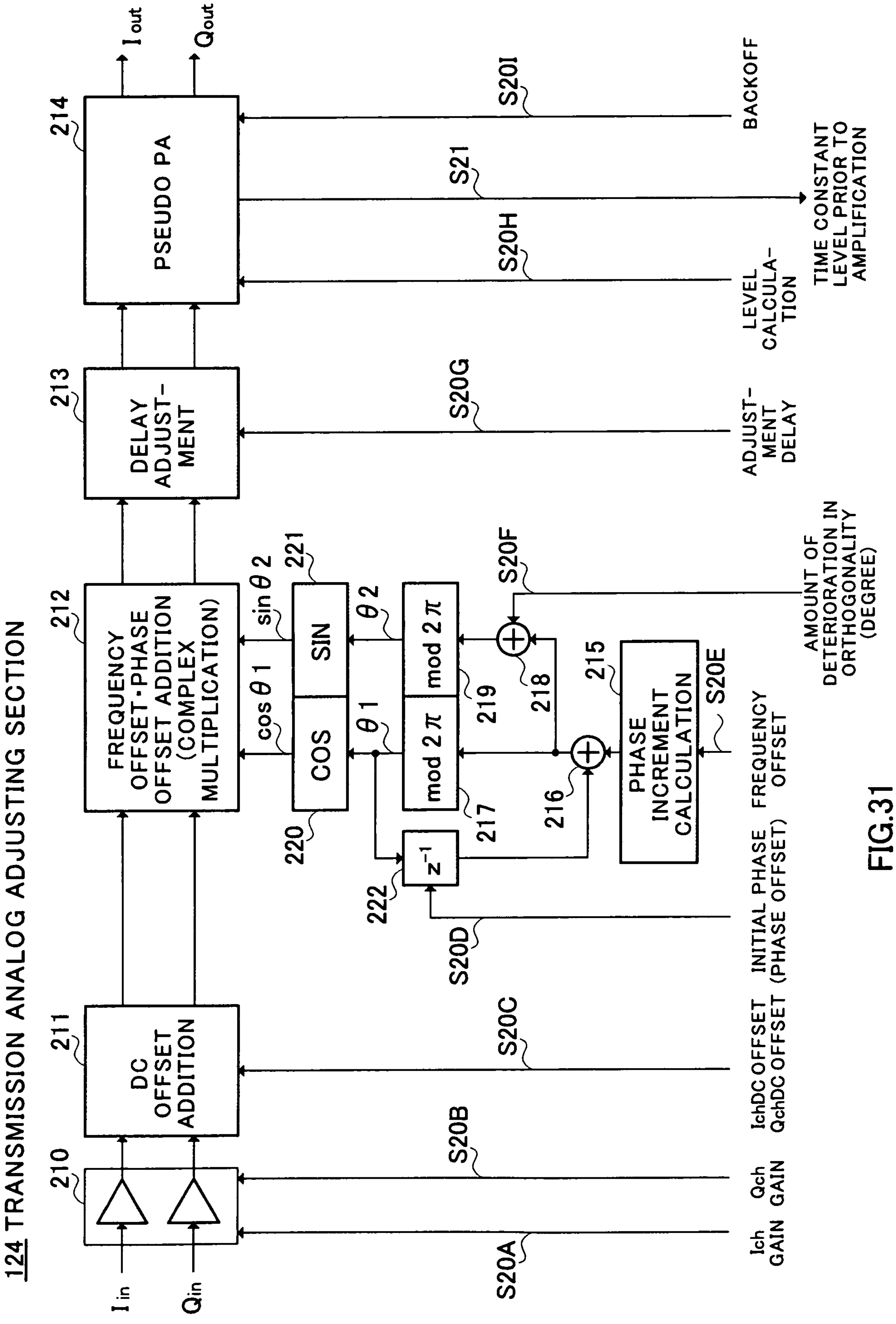

124 TRANSMISSION ANALOG ADJUSTING SECTION
I in
Q in
210
211
DC OFFSET ADDITION
212
FREQUENCY OFFSET・PHASE OFFSET ADDITION (COMPLEX MULTIPLICATION)
213
DELAY ADJUST-MENT
214
PSEUDO PA
I out
Q out
S20A
S20B
S20C
S20D
S20E
S20F
S20G
S20H
S20I
S21
cos θ 1
sin θ 2
COS
SIN
220
221
θ 1
θ 2
mod 2π
mod 2π
217
219
218
216
215
PHASE INCREMENT CALCULATION
z⁻¹
222
Ich GAIN
Qch GAIN
IchDC OFFSET
QchDC OFFSET
INITIAL PHASE (PHASE OFFSET)
FREQUENCY OFFSET
AMOUNT OF DETERIORATION IN ORTHOGONALITY (DEGREE)
ADJUST-MENT DELAY
LEVEL CALCULA-TION
TIME CONSTANT LEVEL PRIOR TO AMPLIFICATION
BACKOFF


FIG.31

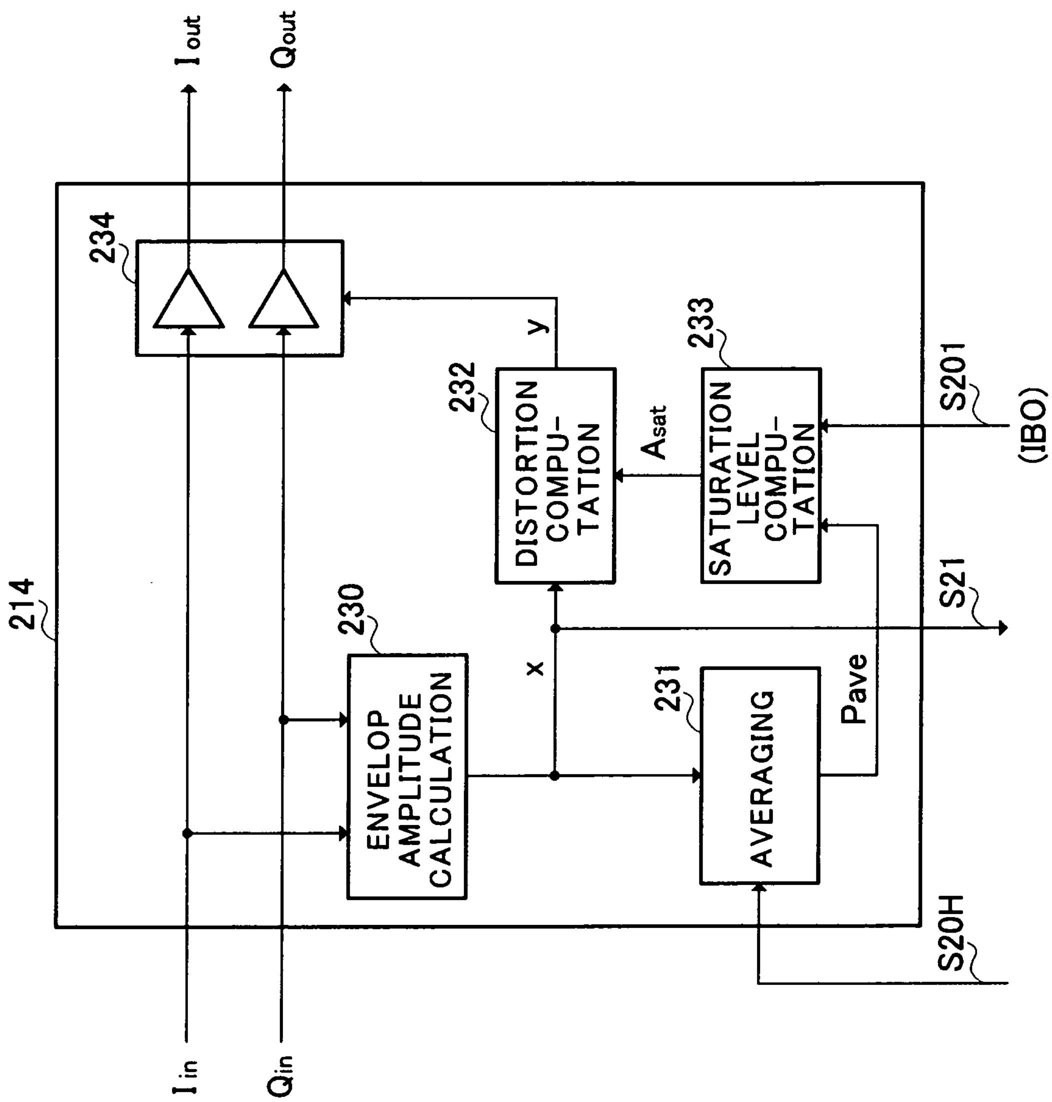
214
234
$I_{out}$
$Q_{out}$
$I_{in}$
$Q_{in}$
230
ENVELOP AMPLITUDE CALCULATION
231
AVERAGING
232
DISTORTION COMPU-TATION
233
SATURATION LEVEL COMPU-TATION
x
y
$A_{sat}$
Pave
S20H
S21
S201
(IBO)

FIG.32

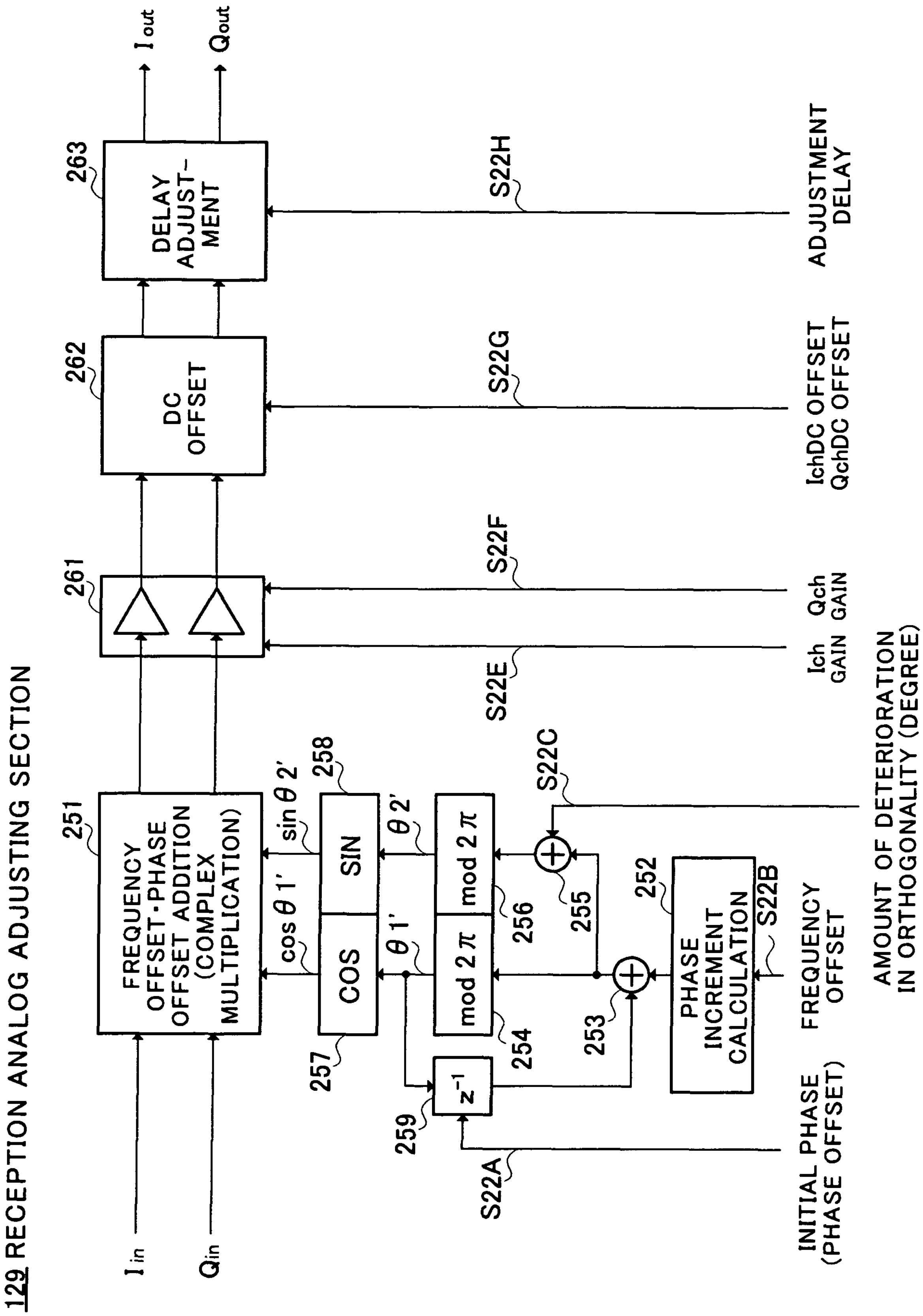
129 RECEPTION ANALOG ADJUSTING SECTION
I in
Q in
251
FREQUENCY OFFSET·PHASE OFFSET ADDITION (COMPLEX MULTIPLICATION)
cos θ 1'
sin θ 2'
257
COS
258
SIN
θ 1'
θ 2'
mod 2π
mod 2π
254
256
259
z^-1
253
255
252
PHASE INCREMENT CALCULATION
S22A
S22B
S22C
INITIAL PHASE (PHASE OFFSET)
FREQUENCY OFFSET
AMOUNT OF DETERIORATION IN ORTHOGONALITY (DEGREE)
261
S22E
S22F
Ich GAIN
Qch GAIN
262
DC OFFSET
S22G
IchDC OFFSET
QchDC OFFSET
263
DELAY ADJUST-MENT
S22H
ADJUSTMENT DELAY
I out
Q out

FIG.33

## INTERNATIONAL SEARCH REPORT

International application No.
PCT/JP03/16531

A. CLASSIFICATION OF SUBJECT MATTER
Int.Cl[7] H04B7/04, H04B17/00, G01R29/00, G01R31/00

According to International Patent Classification (IPC) or to both national classification and IPC

B. FIELDS SEARCHED

Minimum documentation searched (classification system followed by classification symbols)
Int.Cl[7] H04B7/04, H04B17/00, G01R29/00, G01R31/00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2002-325011 A (Koden Electronics Co., Ltd.), 08 November, 2002 (08.11.02), Full text (Family: none) | 1-18 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 April, 2004 (06.04.04) | 20 April, 2004 (20.04.04) |
| Name and mailing address of the ISA/ Japanese Patent Office | Authorized officer |
| Facsimile No. | Telephone No. |

Form PCT/ISA/210 (second sheet) (July 1998)